(19) Europäisches Patentamt
European Patent Office
Office européen des brevets

(11) **EP 0 484 134 B1**

(12) **EUROPEAN PATENT SPECIFICATION**

(45) Date of publication and mention
of the grant of the patent:
**24.02.1999 Bulletin 1999/08**

(51) Int Cl.⁶: **H04N 3/15**

(21) Application number: **91310027.7**

(22) Date of filing: **30.10.1991**

(54) **Control of solid-state image sensor**

Festkörper-Bildsensorsteuerung

Commande d'un capteur d'image à l'état solide

(84) Designated Contracting States:
**DE ES FR GB IT NL**

(30) Priority: **31.10.1990 JP 291814/90**
**31.10.1990 JP 291815/90**
**31.10.1990 JP 291817/90**
**31.10.1990 JP 291818/90**
**31.10.1990 JP 291819/90**
**31.10.1990 JP 291820/90**
**01.11.1990 JP 293667/90**

(43) Date of publication of application:
**06.05.1992 Bulletin 1992/19**

(73) Proprietor: **CANON KABUSHIKI KAISHA**
**Tokyo (JP)**

(72) Inventors:
• **Hieda, Teruo**
**Kawasaki-shi, Kanagawa-ken (JP)**
• **Kyuma, Kenji**
**Yokohama-shi, Kanagawa-ken (JP)**
• **Takaiwa, Kan**
**Hachiohji-shi, Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 476 936**         **FR-A- 2 608 341**
**GB-A- 2 160 060**         **US-A- 4 686 572**

• **PATENT ABSTRACTS OF JAPAN, vol. 14, no.**
**387 (E-0967), 21st August 1990; & JP-A-2 142 183**
**(NEC CORP.) 31-05-1990**
• **PATENT ABSTRACTS OF JAPAN, vol. 13, no.**
**453 (E-831), 11th October 1989; & JP-A-1 176 173**
**(FUJI PHOTO FILM CO., LTD) 12-07-1989**
• **PATENT ABSTRACTS OF JAPAN, vol. 13, no.**
**437 (E-826), 29th September 1989; & JP-A-1 165**
**270 (FUJI PHOTO FILM CO., LTD) 29-06-1989**

## Description

### BACKGROUND OF THE INVENTION

This invention relates to control of solid-state image sensors used, for example, in a video camera or the like.

Known expedients for implementing an exposure correction function in a video camera or the like include a method using diaphragm or the like for directly controlling the amount of light incident upon an image sensor, and a method using an electronic-shutter function for controlling the charge storage time of an image sensor.

However, of the conventional methods described above, the former method using the diaphragm blades requires not only the diaphragm blades themselves but also mechanical members peripheral thereto, as a result of which the video camera using this method is large in size and high in cost. The latter method using the electronic-shutter function is disadvantageous in that the motion of the sensed image is unnatural.

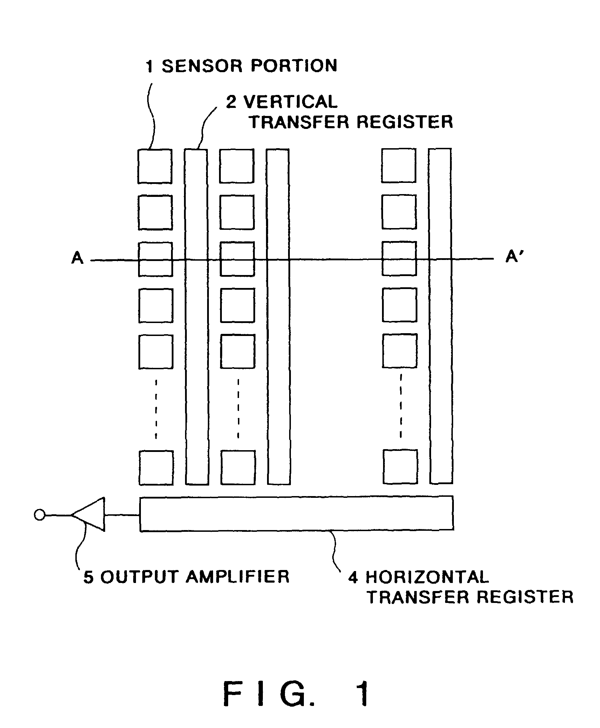

The problem relating to the method using the electronic-shutter function will be described in greater detail. Fig. 1 is a plan view schematically illustrating the structure of an interline transfer-type CCD. Numeral 1 denotes a sensor which performs a photoelectric conversion, 2 a vertical transfer register, 4 a horizontal transfer register, and 5 an output amplifier.

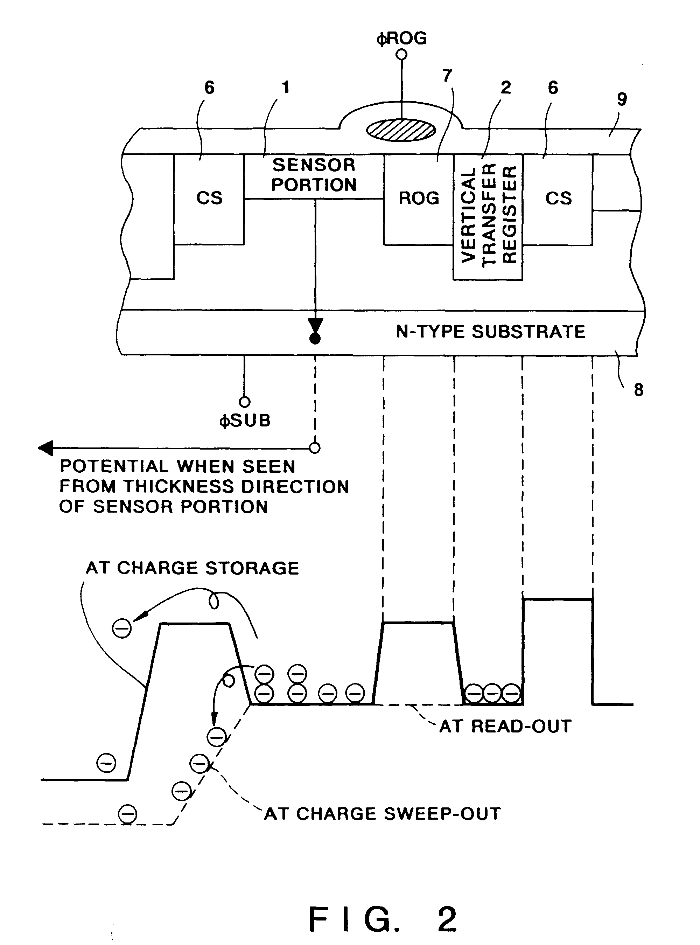

Fig. 2 is a sectional view taken along line A-A' of the CCD of Fig. 1 and a diagram illustrating the states of potentials at various portions corresponding to this cross section.

In Fig. 2, numeral 6 denotes a channel stop (CS) for pixel separation, 7 a read-out gate (ROG) for transferring the electric charge, which has accumulated in the sensor portion 1, to the vertical transfer register 2, 8 a substrate, and 9 an oxide film

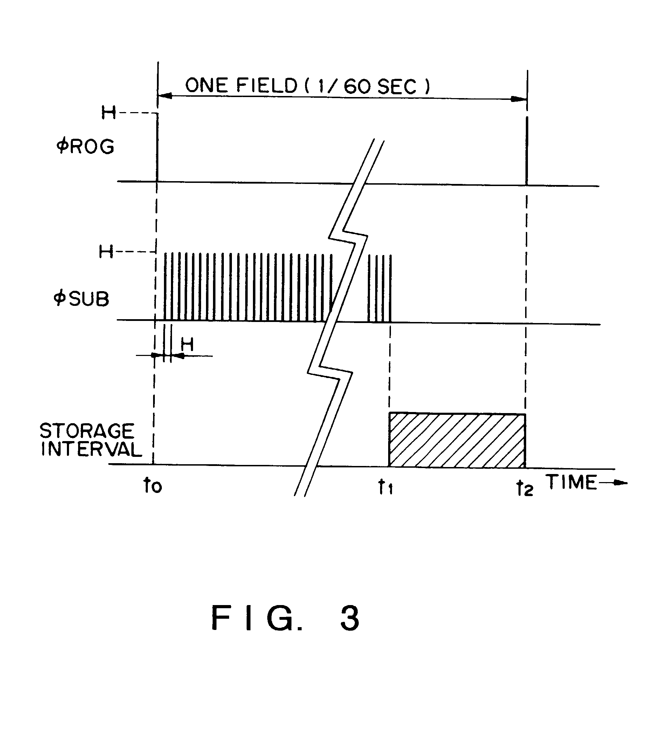

The operation of the conventional electronic shutter will now be described with reference to Figs. 2 and 3.

Fig. 3 is a timing chart of various signals in one field interval T of a standard television signal. An $\phi$ROG pulse is a pulse applied to the read-out gate (ROG) 7. When the logic level of this pulse is "H", the potential of the read-out gate (ROG) 7 falls and the electric charge in the sensor portion 1 is transferred to the vertical transfer register 2. An elimination pulse $\phi$SUB is a pulse applied to the substrate 8. When this pulse is "H", the electric charge which has accumulated in the sensor portion 1 is swept out (eliminated) to the exterior through a $\phi$SUB terminal.

In this example, as shown in Fig. 3, the $\phi$ROG pulse is applied to the CCD during the vertical retrace interval, and the $\phi$SUB pulse is applied to the CCD during the horizontal retrace interval. After the $\phi$ROG pulses is applied and the electric charge of the sensor portion 1 is transferred to the vertical transfer register 2 at time $t_0$, the next field interval begins. However, since $\phi$SUB attains the "H" level at every horizontal retrace interval from time $t_0$ to time $t_1$, the electric charge which has accumulated from $t_0$ to $t_1$ does not remain in the sensor portion 1. Since $\phi$SUB is at the "L" level from time $t_1$ to time $t_2$, electric charge is stored in the sensor portion 1 during this time period. This charge is transferred to the vertical transfer register 2 by the "H"-level $\phi$ROG pulse applied at time $t_2$. The end result is that the exposure time of the CCD in this case becomes $(t_2-t_1)$.

Accordingly, though the conventional electronic shutter adequately performs the function of an electronic shutter, problems are encountered when it is applied to correction of exposure. In particular, when exposure time is varied in a continuous manner, a difference in dynamic resolution from one exposure time to another appears as is on the picture. As a consequence, the picture that results is highly unattractive since the dynamic resolution changes from one field to the next.

GB-A-2200509 describes a solid-state image pick-up device of the CCD type which is arranged such that charges accumulated in intermittent accumulation periods are output to a vertical shift register where they are added or summed and then fed to a horizontal shift register. The sensitivity of the device is controlled by controlling the accumulation time without causing a moving image to appear discontinuous.

According to one aspect of the present invention, an image sensing apparatus comprising:

image sensing means for carrying out a plurality of intermittent charge accumulating operations for each pixel of an image to produce a plurality of photoelectric signals; and
means for summing the plurality of photoelectric signals representing a pixel over a sum total $(T_o)$ accumulation period for that pixel, characterised by control means for changing the temporal distribution pattern of the plurality of intermittent accumulating operations without changing the sum total $(T_0)$ accumulation period.

The present invention also provides a method of operating an image sensing apparatus in accordance with claim 20.

An embodiment of the present invention realizes control of a solid-state image sensor in which dynamic resolution is fixed.

An embodiment of the present invention realizes control of a solid-state image sensor in which an exposure correction suited to the conditions of a photographic subject is possible.

An embodiment of the present invention realizes control of a solid-state image sensor in which dynamic resolution is capable of being improved.

An embodiment of the present invention realizes control of a solid-state image sensor in which dynamic resolution varies in a natural manner in a case where exposure is corrected in dependence upon the conditions of the subject photographed.

An embodiment of the present invention provides an image sensing apparatus having sensing means for for receiving a light signal, performing a photoelectric conversion and storing information, summing means for reading in the information from the sensing means, memory means for storing information from the summing means, and eliminating means for eliminating information from the sensing means, the information in the sensing means being eliminated by the eliminating means intermittently two or more times in one field interval, thereby controlling information storage time, wherein the apparatus has a first driving mode in which, in one field interval, the eliminating means operates at a first periodic timing after a vertical synchronizing signal, and the information from the sensing means is read by the summing means at a second periodic timing, which has a period identical with that of the first periodic timing, and which lags behind the first periodic timing by a predetermined time $T_1$, and a second driving mode in which, in one field interval, the eliminating means operates at a third periodic timing, which is obtained by frequency-dividing the first periodic timing at a predetermined frequency-dividing ratio, and, at the same time, the information from the sensing means is read by the summing means at a fourth periodic timing, which is obtained by frequency-dividing the second periodic timing at a frequency-dividing ratio identical with the first-mentioned frequency-dividing ratio, the first driving mode and the second driving mode being selectable.

An embodiment of the present invention provides a solid-state image sensing apparatus having sensing means for receiving a light signal, performing a photoelectric conversion and storing information, summing means for reading in the information from the sensing means, memory means for storing information from the summing means, and eliminating means for eliminating information from the sensing means, the information in the sensing means being eliminated by the eliminating means intermittently two or more times in one field interval, thereby controlling information storage time, wherein, in one field interval, operation of the eliminating means is performed successively each second predetermined time $T_2$ after a first predetermined time $T_1$ from a vertical synchronizing signal, the information from the sensing means is read by the summing means successively, at every operation of the eliminating means, a third predetermined time $T_3$ after the end of this operation, and the first predetermined time $T_1$, second predetermined time $T_2$ and third predetermined time $T_3$ are controlled so as to vary independently or in association, whereby virtual storage time of the sensing means in one field interval is controlled.

An embodiment of the present invention provides a solid-state image sensing apparatus having sensing means for receiving a light signal, performing a photoelectric conversion and storing information, summing means for reading in the information from the sensing means, memory means for storing information from the summing means, and eliminating means for eliminating information from the sensing means, the information in the sensing means being eliminated by the eliminating means intermittently two or more times in one field interval, thereby controlling information storage time, wherein the apparatus has a first driving mode in which, in one field interval, the information from the sensing means is read by-the summing means at a predetermined time after the end of each one of plural operations of the eliminating means, and a second driving mode in which, in one field interval, the information from the sensing means is read by the summing means after completion of all operations of the eliminating means in one field interval, the first driving mode and the second driving mode being selectable or combinable.

An embodiment of the present invention provides solid-state image sensing apparatus having sensing means for receiving a light signal, performing a photoelectric conversion and storing information, summing means for reading in the information from the sensing means, memory means for storing information from the summing means, and eliminating means for eliminating information from the sensing means, the information in the sensing means being eliminated by the eliminating means intermittently in one field interval, thereby controlling overall information storage time, wherein the apparatus has a first driving mode in which, in one field interval, operation of the eliminating means is performed each second predetermined time $t_2$ after a first predetermined time $t_1$ from a vertical synchronizing signal, and the information from the sensing means is read by the summing means at a third predetermined time $t_3$ after the end of each one of a predetermined number n of operations among the operations of the eliminating means, and a second driving mode in which, in one field interval, the information from the sensing means is read by the summing means after completion of all operations of the eliminating means in one field interval, the first predetermined time $t_1$ and predetermined number of times n being gradually changed when the first driving mode and the second driving mode are changed over, with the total storage time being held constant.

Embodiments of the present invention will now be described, by way of example only, with reference to the accompanying drawings, in which:

Fig. 1 is a plan view schematically illustrating the structure of an interline transfer-type CCD;
Fig. 2 is a sectional view taken along line A-A' of the CCD of Fig. 1 and a diagram illustrating the states of potentials at various portions corresponding to this cross section;
Fig. 3 is a timing chart showing various signals in one field interval of a standard television signal;
Fig. 4 is a plan view schematically illustrating the structure of a frame interline transfer-type CCD;

Fig. 5 is a block diagram illustrating the construction of the principal portions of a video camera to which a first embodiment of the present invention is applied;

Fig. 6 is a timing chart illustrating the operation of a first driving mode in the first embodiment;

Fig. 7 is a timing chart illustrating the operation of a second driving mode in the first embodiment;

Fig. 8 is a timing chart illustrating the operation of a second embodiment;

Fig. 9 is a block diagram illustrating the construction of the principal portions of a video camera to which the second embodiment is applied;

Fig. 10 is a flowchart illustrating the algorithm of an arithmetic circuit in the first embodiment;

Fig. 11 is a timing chart in which times $T_1$, $T_2$, $T_3$ set by the arithmetic circuit are illustrated in each mode of the first embodiment;

Fig. 12 is a timing chart the manner in which a CCD is driven in a first example not falling within the scope of the invention;

Fig. 13 is a flowchart illustrating the algorithm of an arithmetic circuit in the example of Fig. 12;

Fig. 14 is a timing chart in which times $T_1$, $T_2$, $T_3$ set by the arithmetic circuit are illustrated with regard to a dynamic mode in the example of Fig. 12;

Fig. 15 is a timing chart in which times $T_1$, $T_2$, $T_3$ set by the arithmetic circuit are illustrated with regard to a static mode in the example of Fig. 12;

Fig. 16 is a timing chart illustrating the operation of the second driving mode in a second example not falling within the scope of the invention claimed;

Fig. 17 is a timing chart illustrating the operation of the second driving mode in a third example not falling within the scope of the invention claimed;

Fig. 18 is a timing chart illustrating the operation of the second driving mode in a third embodiment;

Fig. 19 is a timing chart illustrating a modification of the operation of the second driving mode in the third embodiment; and

Fig. 20 is a timing chart illustrating the operation of a fourth embodiment.

## DESCRIPTION OF THE PREFERRED EMBODIMENTS

Several preferred embodiments for a case where the present invention is applied to a video camera will be described in detail with reference to the accompanying drawings.

Prior to describing each of the embodiments in detail, a solid-state image sensor (CCD) used commonly in each of these embodiments will be discussed.

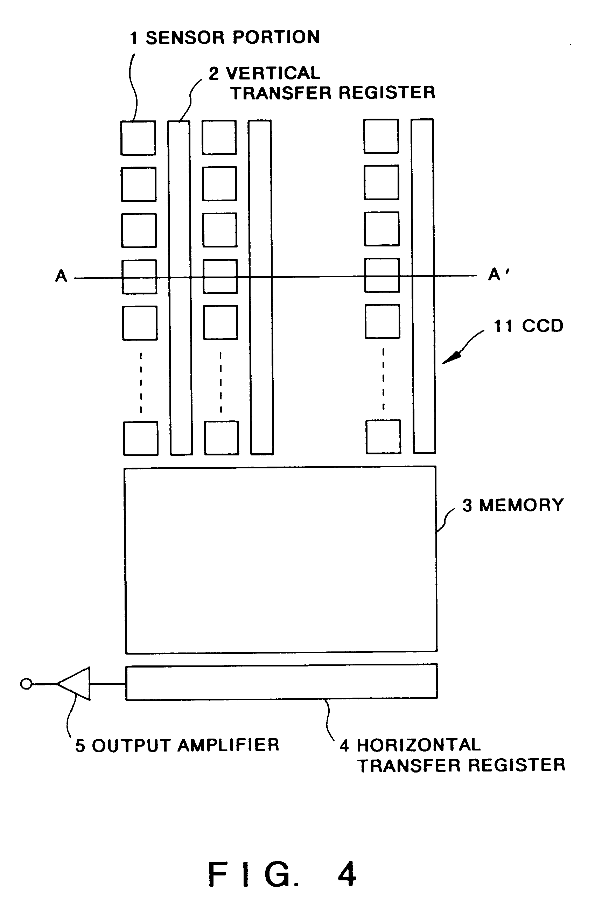

Fig. 4 is a plan view schematically illustrating the structure of a CCD 11 used in each embodiment. The CCD 11 is referred to as a frame interline transfer-type CCD. This differs from the interline transfer-type CCD of Fig. 3 in that a memory 3 (second memory means) is provided. The number of memory cells in the memory 3 is the same as the number of sensor portions 1 (sensing means).

When light strikes the sensor portion 1, an electric charge is generated and accumulates within the sensor portion. The accumulated charge is transferred to the vertical transfer register 2 (first memory means), after which it is transferred to the memory 3 in the vertical retrace interval. Thereafter, the charge is transferred to the horizontal transfer register 4, whence it is read out through the output amplifier 5.

The sectional view taken along line A-A' of the CCD 11 of Fig. 4 and a diagram illustrating the states of potentials at various portions corresponding to this cross section are similar to those of Fig. 2. In addition, the procedure for sweeping out the electric charge and the procedure for transferring the electric charge from the sensor portion 1 to the vertical transfer register 2 are similar to those of the prior art described earlier.

Each of the embodiments of the invention will now be described in detail.

(First Embodiment)

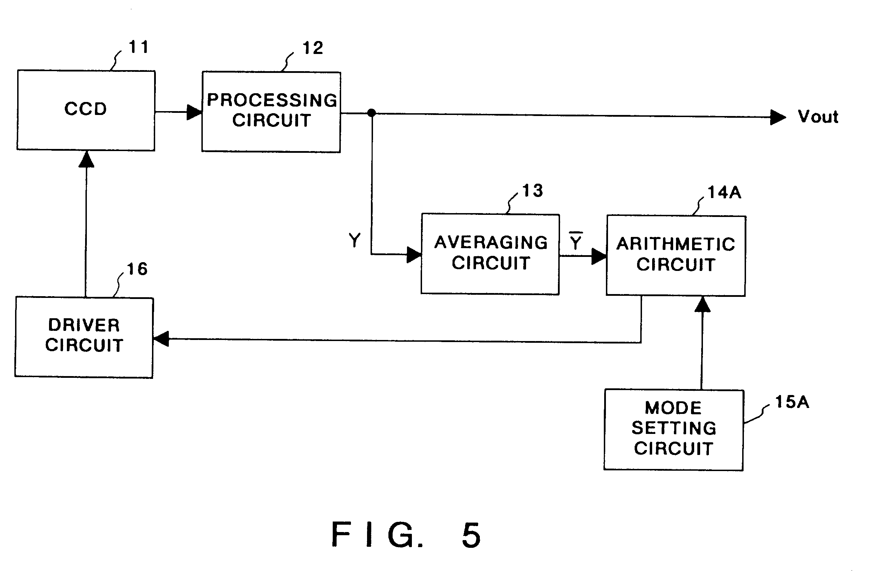

Fig. 5 is a block diagram illustrating the construction of the principal components of a video camera according to the first embodiment. The output signal extracted from the CCD 11 undergoes corrections such as a γ correction, knee correction and automatic-gain correction in a processing circuit 14, and the corrected signal is encoded and outputted as a video signal Vout. Meanwhile, a luminance signal Y in the signal outputted from the processing circuit 12 is converted into a $\overline{Y}$ signal by an averaging circuit 13, and the resulting $\overline{Y}$ signal is applied to an arithmetic circuit 14A, where the signal is processed. The arithmetic circuit 14A computes the drive timing of the CCD 11 from the output signal produced by the averaging circuit 13 and an output signal produced by a mode setting circuit 15A, described below. A driver circuit 16, which is controlled in accordance with the drive timing computed, drives the CCD 11 under the control of the arithmetic circuit 14A.

The mode setting circuit 15A, which has a plurality of modes conforming to the conditions of the subject being photographed, performs a changeover operation so as to select any one of these modes. In this embodiment, the plurality of modes shall be two, by way of example. Though they will be described in greater detail later, one mode is a first driving mode suitable for a fast-moving subject, and the other is a second driving mode suited to a slow-moving subject. Upon receiving a selection signal from the mode setting circuit 15A, the arithmetic circuit 14A sets the drive timing of the CCD 11. The driver circuit 16 drives the CCD 11 in accordance with the timing set by the arithmetic circuit 14A.

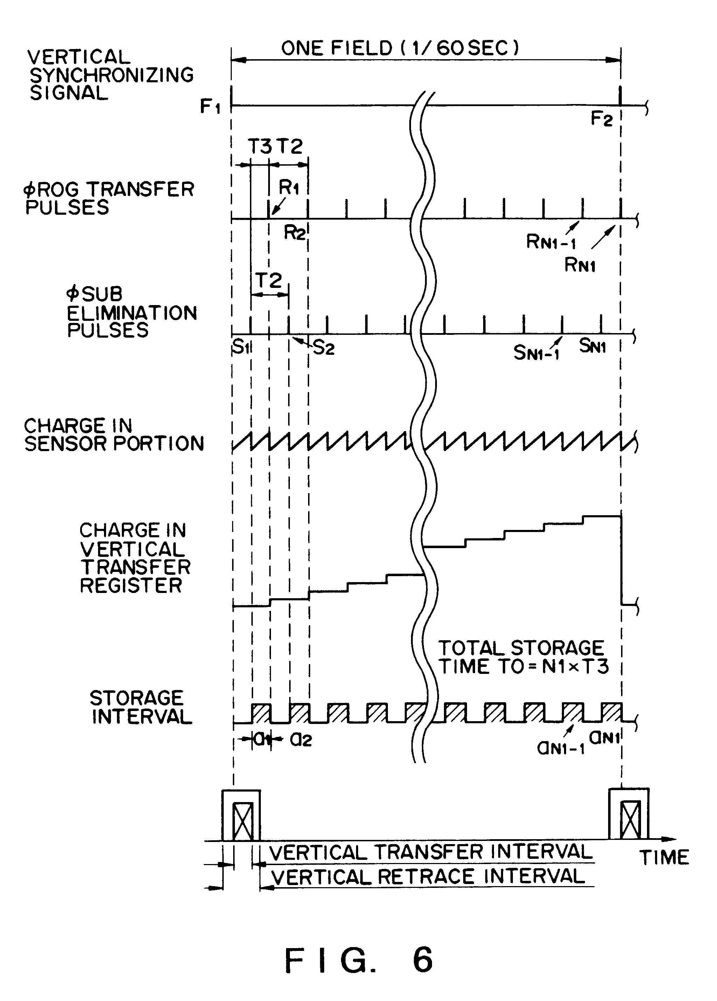

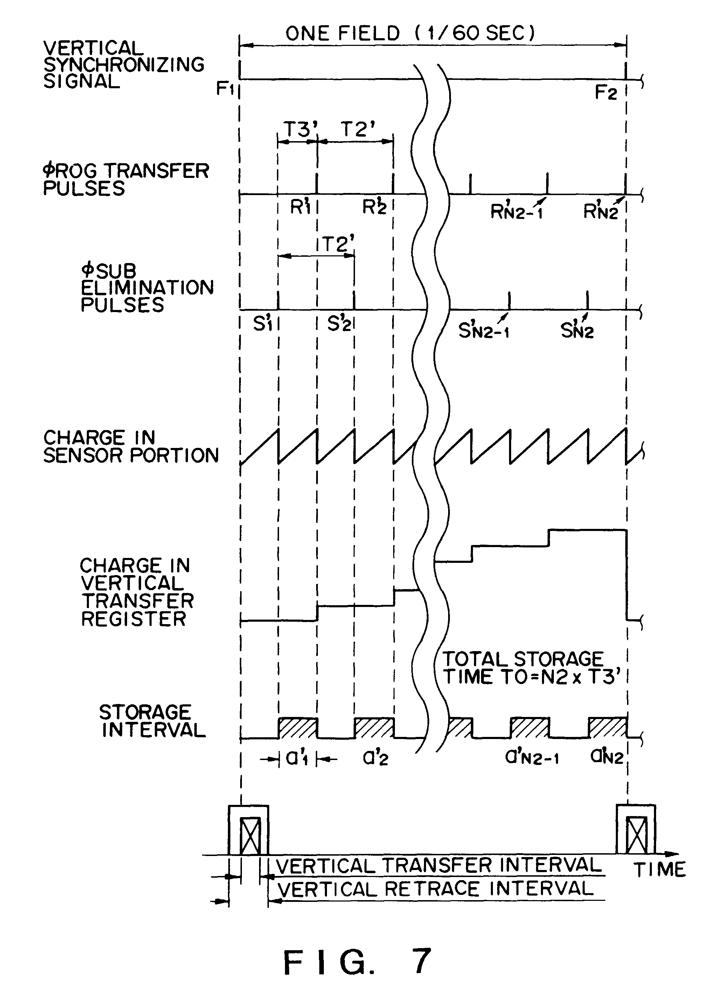

Fig. 6 is a diagram for describing the operation of the first embodiment and illustrates the manner of drive in a case where an exposure correction is performed by the CCD 11 (Fig. 4) itself. Fig. 6 illustrates the first driving mode, and Fig. 7 illustrates the second driving mode.

As shown in Fig. 6, in response to application of a $\phi$ROG transfer pulse to the CCD 11 at time $F_1$, the electric charge accumulated in the sensor portion 1 up to the instant just prior to application of the aforementioned pulse is transferred from the sensor portion 1 to the vertical transfer register 2. One field interval of the charge is delivered from the vertical transfer register 2 to the memory 3 at a high speed in the vertical retrace interval (the interval during which the delivery of the charge is made is referred to as a "vertical transfer interval" in Fig. 6). Thereafter, at a first periodic timing (period $T_2$) after the vertical synchronizing signal, $\phi$SUB elimination pulses $S_1$, $S_2$, $\cdots$, $S_{N1}$ are applied to the CCD 11. Further, $\phi$ROG transfer pulses $R_1$, $R_2$, $\cdots$, $R_{N1}$ are applied to the CCD 11 at a second periodic timing the period of which is identical with that of the first periodic timing. As a result, sweep-out (elimination) and storage of the charge are performed in an alternating manner.

Here the $\phi$SUB elimination pulses $S_1$, $S_2$, $\cdots$, $S_{N1}$ and $\phi$ROG transfer pulses $R_1$, $R_2$, $\cdots$, $R_{N1}$ are applied to the CCD 11 in, or in the proximity of, the horizontal retrace interval of a standard television signal. The reason for this is that noise would appear in the picture if the $\phi$SUB elimination pulses and $\phi$ROG transfer pulses were applied at a time other than that mentioned.

Furthermore, the $\phi$ROG transfer pulses $R_1$, $R_2$, $\cdots$, $R_{N1}$ are applied following a delay of time $T_3$ with respect to the $\phi$SUB elimination pulses $S_1$, $S_2$, $\cdots$, $S_{N1}$. Accordingly, intervals $a_1$, $a_2$, $\cdots$, $a_{N1-1}$, $a_{N1}$ corresponding to the time difference between the $\phi$SUB elimination pulses and $\phi$ROG transfer pulses are the actual charge storage intervals, and the storage of the charge is performed is dispersed fashion.

The charge is moved from the sensor portion 1 to the vertical transfer register 2 by the $\phi$ROG transfer pulses $R_1$, $R_2$, $\cdots$, $R_{N1}$. Accordingly, the total sum of the charge (the charge produced during the total storage time $T_0 = N_1 \times T_3$) produced in the sensor portion 1 during the fine storage intervals $a_1$, $a_2$, $\cdots$, $a_{N1}$ is stored in each of the cells of the vertical transfer register 2 immediately after the end of the interval during which the $\phi$ROG transfer pulse $R_{N1}$ is at the "H" level. In other words, by changing the application timing and the number of the $\phi$SUB elimination pulses in one field interval, the total sum of the electric charge stored in the vertical transfer register is controlled and the CCD 11 itself functions as a shutter.

Thus, by distributing the storage intervals evenly throughout one entire field interval, the time from the start to the end of acceptance of one frame of image information is rendered constant, and therefore so is the dynamic resolution.

In Fig. 7, on the other hand, the application timings of the $\phi$SUB elimination pulses $S_1'$, $S_2'$, $\cdots$, $S_{N2}'$ and the application timings of the $\phi$ROG transfer pulses $R_1'$,

$R_2'$, $\cdots$, $R_{N2}'$ are obtained by frequency-dividing, by two, the respective application timings of the $\phi$SUB elimination pulses and the application timings of the $\phi$ROG transfer pulses shown in Fig. 6 (i.e., period $T_2' = 2T_2$).

In comparison with Fig. 6, the numbers of the $\phi$SUB elimination pulses and $\phi$ROG transfer pulses are halved ($N_2 = N_1/2$), and the time difference $T_3'$ between the $\phi$SUB elimination pulses and $\phi$ROG transfer pulses is twice the time difference $T_3$. Accordingly, the lengths of storage times $a_1'$, $a_2'$, $\cdots$, $a_{N2}'$ are doubled, and the total storage time $T_0 = N_2 \times T_3'$ in one field interval is the same as in the case of Fig. 6.

Accordingly, if the application timings of the fSUB elimination pulses and $\phi$ROG transfer pulses are changed by frequency division, it is possible to finely or coarsely distribute the storage times while making the total storage time in one field interval identical.

The use of the first driving mode, in which storage times are finely distributed, and of the second driving mode, in which storage times are coarsely distributed, will now be described.

First, the difference between these two driving modes in terms of the blooming phenomenon will be described.

In a case where strong light is incident upon a portion of a scene to be photographed, the amount of the electric charge exceeds the storage capacity of the sensor 1 at the portion where the strong light has impinged, and the charge overflows as a result. When such charge overflow occurs, the charge which has overflowed from the sensor portion 1 flows into the signal transfer portion and so-called blooming results. This is a phenomenon in which vertical white bands appear on the picture, thereby producing a picture which is very unattractive.

The longer the continuous charging time in one field interval, the more easily the charge overflow occurs, since the charge which accumulates in the sensor portion 1 in such case grows in quantity. Conversely, if the charging time in one field interval is finely divided and the charge in the sensor portion 1 is delivered to the vertical transfer register 2 is small amounts, blooming can be made to occur less easily. In other words, when charging time is finely split up as in the first driving mode shown in Fig. 6, blooming is less likely to occur in comparison with the coarse division of charging time of the second driving mode shown in Fig. 7.

Next, the difference between the two driving modes in terms of the moving speed of the subject will be discussed.

First, in a case where the first driving mode is applied to a subject moving at a comparatively low speed, the picture which results is one in which a plurality of images overlap one another because the time intervals between neighboring ones of the fine charging intervals is short. This produces an unattractive picture. By contrast, when the second driving mode is applied to a slow-moving subject, the time intervals between neighboring ones of the fine charging intervals is long, and therefore stroboscopic discontinuous images are obtained. The result is a picture with comparatively little unnaturalness.

Accordingly, in a situation where, for example, the subject is fast-moving and there is a strong spotlight in the scene, the first driving mode should be selected. On the other hand, if the subject is slow-moving and there is not a very strong spotlight in the scene, the second driving mode should be selected. By thus making appropriate use of the two driving modes, it is possible to perform exposure control that is suited to the condition of the subject.

Thus, in accordance with the first embodiment set forth above, dispersed storage of electric charge is carried out in one field interval so that dynamic resolution can be held constant. Furthermore, in order to obtain the same overall storage interval, modes in which the dispersed storage of charge is performed finely and coarsely are selected in conformity with the condition of the subject. This makes possible exposure control suited to the condition of the subject.

(Second Embodiment)

In the first embodiment, two modes for performing the dispersed storage of charge finely and coarsely in one field interval are provided, and therefore exposure control conforming to the condition of the subject is achieved. However, in the first embodiment, the storage times are evenly distributed over the interval from the beginning to the end of one field interval. As a consequence, a time difference approximating 1/60 of a second develops between the electric charge produced at the sensor portion 1 in the initial storage interval of one field interval and the electric charge produced at the sensor portion 1 in the final storage interval of one field interval. Accordingly, though the dynamic resolution can be rendered constant in the first embodiment, the images can take on a strobe-like effect or overlap when a moving subject is photographed, and the disadvantageous result is a decline in the dynamic resolution. The second embodiment is intended to solve these problems.

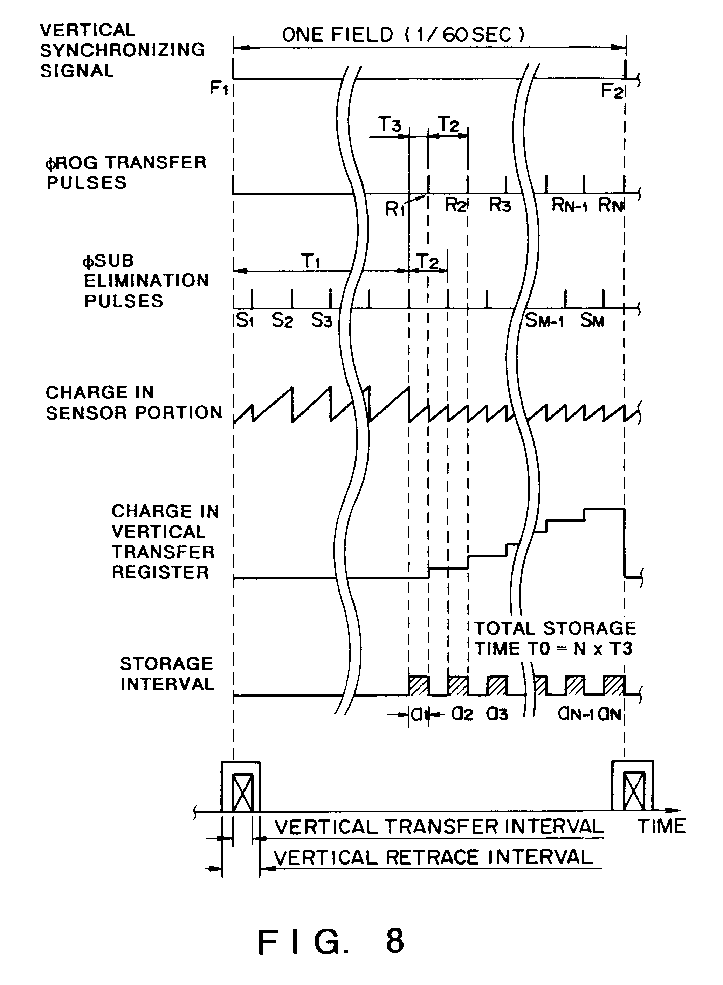

Fig. 8 is a diagram for describing the general operation of the second embodiment and illustrates the manner in which the CCD 11 is driven in a case where exposure is corrected by the CCD 11 of Fig. 4 itself.

As shown in Fig. 8, in response to application of a $\phi$ROG transfer pulse to the CCD 11 at time $F_1$, the electric charge accumulated in the sensor portion 1 up to the instant just prior to application of the aforementioned pulse is transferred from the sensor portion 1 to the vertical transfer register 2. One field interval of the charge is delivered from the vertical transfer register 2 to the memory 3 at a high speed in the vertical retrace interval (the interval during which the delivery of the charge is made is referred to as a "vertical transfer interval" in Fig. 8). Thereafter, at the intervals of a second predetermined time $T_2$, $\phi$SUB elimination pulses are applied to the CCD 11 M times in one field interval, as indicated by $S_1$, $S_2$, $\cdots$, $S_M$. The charge that has accumulated in the sensor portion 1 is swept out (eliminated) whenever a $\phi$SUB elimination pulse is generated.

Further, $\phi$ROG transfer pulses are applied to the CCD 11 at the intervals of the second predetermined time $T_2$, which is identical with that of the fSUB elimination pulses, in the course of one field interval following the point in time $F_1$, as indicated by $R_1$, $R_2$, $\cdots$, $R_N$. It is arranged so that the $\phi$SUB elimination pulse immediately preceding the initial pulse $R_1$ is applied after a delay of a first predetermined time $T_1$ from the point in time $F_1$. A third predetermined time $T_3$, which is the time difference between the $\phi$SUB elimination pulses and the $\phi$ROG transfer pulses, is equivalent to each of the actual storage intervals $a_1$, $a_2$, $\cdots$, $a_N$ of the sensor.

In other words, the charge stored in the sensor portion 1 in the N-number of fine storage intervals $a_1$, $a_2$, $\cdots$, $a_N$ in one field interval is successively transferred to the vertical transfer register 2 by the $\phi$ROG transfer pulses $R_1$, $R_2$, $\cdots$, $R_N$ and is stored in each cell of the vertical transfer register 2.

Accordingly, the total sum of the charge (charge stored in the overall storage time $T_0 = N \times T_3$) produced in the sensor portion 1 in N-number of fine storage intervals each having the length of time $T_3$ in one field interval is added up in the vertical transfer register 2 and mixed, after which the charge is transferred vertically one time at high speed and stored in the memory 3.

As in the first embodiment, the $\phi$SUB elimination pulses $S_1$, $S_2$, $\cdots$, $S_M$ and $\phi$ROG transfer pulses $R_1$, $R_2$, $\cdots$, $R_N$ are each applied to the CCD 11 in, or in the proximity of, the horizontal retrace interval of a standard television signal. The reason for this is that noise would appear in the picture if the $\phi$SUB elimination pulses or $\phi$ROG transfer pulses were applied at a time other than that mentioned.

The charge stored in the memory 3 is subsequently transferred to the horizontal transfer register 4 and extracted as an output signal through the output amplifier 5. This process is similar to that of the interline transfer-type CCD of Fig. 1.

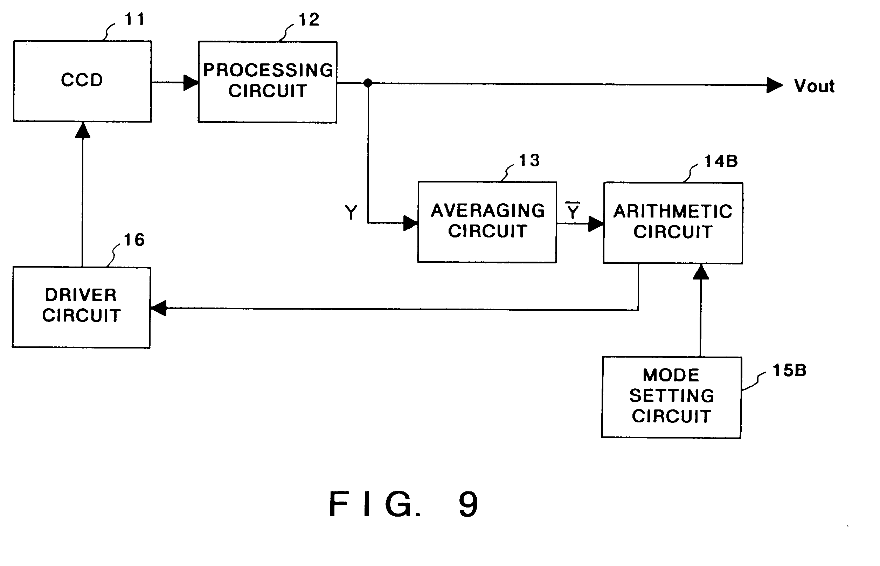

Fig. 9 is a block diagram illustrating the construction of the principal components of a video camera according to the first embodiment. The output signal extracted from the CCD 11 undergoes corrections such as a $\gamma$ correction, knee correction and automatic-gain correction in the processing circuit 12, and the corrected signal is encoded and outputted as the video signal Vout. Meanwhile, a luminance signal Y in the signal outputted from the processing circuit 12 is converted into a $\overline{Y}$ signal by the averaging circuit 13, and the resulting $\overline{Y}$ signal is applied to an arithmetic circuit 14B, where the signal is processed. The arithmetic circuit 14B computes the drive timings of the CCD 11, namely $T_1$, $T_2$,

$T_3$, from the output signal produced by the averaging circuit 13 and an output signal produced by a mode setting circuit 15B, described below. A driver circuit 16, which is controlled in accordance with the drive timings computed, drives the CCD 11 under the control of the arithmetic circuit 14B.

The mode setting circuit 15B, which has a plurality of modes conforming to the conditions of the subject being photographed, performs a changeover operation so as to select any one of these modes. In this embodiment, the plurality of modes shall be two, namely a dynamic mode suitable for a fast-moving subject, and a static mode suited to a slow-moving subject. Upon receiving a selection signal from the mode setting circuit 15B, the arithmetic circuit 14B sets the values of $T_1$, $T_2$, $T_3$. The driver circuit 16 drives the CCD 11 in accordance with the set values of $T_1$, $T_2$, $T_3$ set by the arithmetic circuit 14B.

Methods of changing $T_1$, $T_2$, $T_3$ in conformity with the condition of the subject will now be described.

<First Example>

Discussed first will be a first example of a method of changing $T_1$, $T_2$, $T_3$ in conformity with the condition of the subject.

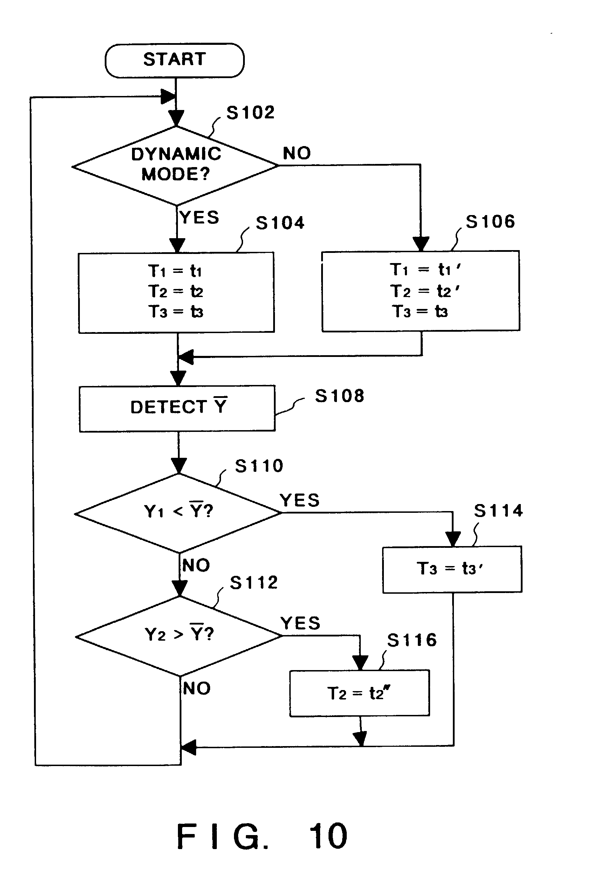

Fig. 10 is a flowchart illustrating the algorithm of the arithmetic circuit 14B according to the first example. Step S102 of the flowchart calls for the arithmetic circuit 14B to determine whether the mode is the dynamic mode or static mode, based upon the output signal from the mode setting circuit 15B. If the decision rendered at step S102 is that the dynamic mode is in effect, the program proceeds to step S104, at which the arithmetic circuit 14B sets $T_1$, $T_2$, $T_3$ to $t_1$, $t_2$, $t_3$, respectively. This is followed by step S108. If the decision rendered at step S102 is that the static mode is in effect, the program proceeds to step S106, at which the arithmetic circuit 14B sets $T_1$, $T_2$, $T_3$ to $t_1'$, $t_2'$, $t_3'$, respectively. This is followed by step S108. It should be noted that $t_1$, $t_1'$, $t_2$, $t_2'$ are fixed values, and that the relations $t_1 < t_1'$, $t_2 < t_2'$ hold.

The reason for setting $T_1$ to a large value in the dynamic mode is that the image would blur as in the manner of the strobe effect if $T_1$ were set to a small value with respect to a fast-moving subject. In other words, $T_1$ is set large to shorten the time from the start of charge storage to the end of charge storage of the sensor portion 1 in one field interval, thereby reducing blurring.

Next, at step S108, the arithmetic unit 14B senses the magnitude of the averaged luminance signal $\overline{Y}$ from the averaging circuit 13, after which the program proceeds to step S110. Here the level of the averaged luminance signal $\overline{Y}$ is compared with a reference value $Y_1$. If the level of the averaged luminance signal $\overline{Y}$ is found to be greater than $Y_1$ at step S110, namely if the subject is bright, then the arithmetic circuit 14B sets $T_3$ to $t_3'$ ($t_3' < t_3$). On the other hand, if the level of the aver-

aged luminance signal $\overline{Y}$ is found to be equal to or less than $Y_1$ at step S110, namely if the subject is of ordinary brightness or is dark, then the program proceeds to step S112.

The level of the averaged luminance signal $\overline{Y}$ is compared with a reference value $Y_2$ at step S112. If the level of the averaged luminance signal $\overline{Y}$ is found to be less than $Y_2$ ($Y_2 > \overline{Y}$) at step S112, namely if the subject is very dark, then the arithmetic circuit 14B sets $T_2$ to $t_2''$ (where $t_2'' = t_2/2$), thereby doubling the total storage time.

If the level of the averaged luminance signal $\overline{Y}$ is found to be equal to or greater than the reference value $Y_2$ at step S112, namely if the subject is of ordinary brightness, then $T_1$, $T_2$, $T_3$ remain at the values set at step S104 or S106. Processing then returns to the beginning of the program and the foregoing operation is repeated for every field.

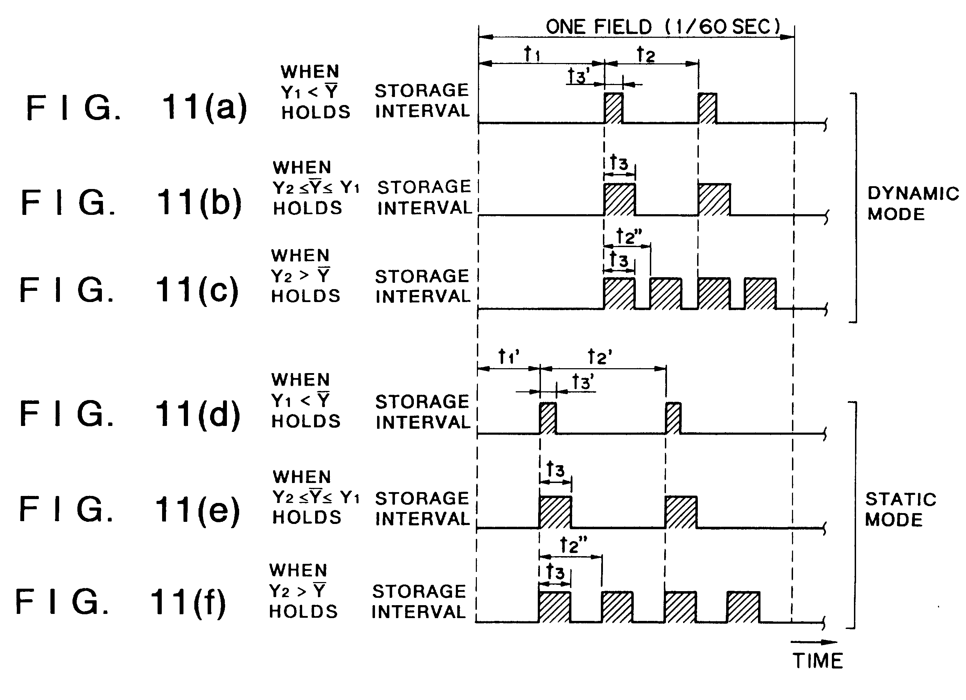

Fig. 11 is a timing chart in which $T_1$, $T_2$, $T_3$ set by the arithmetic circuit 14B are illustrated for each mode. The dynamic mode will be described first. Fig. 11 (a) is for the case where $Y1 < \overline{Y}$ holds, namely for when the subject is bright. $T_1$, $T_2$, $T_3$ are set to $t_1$, $t_2$, $t_3$, respectively, and the storage time $T_3$ is set small.

Fig. 11(b) is for the case where $Y2 \leq \overline{Y}$ holds, namely for when the subject is of ordinary brightness. $T_1$, $T_2$, $T_3$ are left set at the values initially set in the flowchart of Fig. 10, i.e., $T_1 = t_1$, $T_2 = t_2$, $T_3 = t_3$.

Fig. 11(c) is for the case where $Y_2 > \overline{Y}$ holds, namely for when the subject is dark. $T_1$, $T_2$, $T_3$ are set at $t_1$, $t_2''$, $t_3$, respectively, and the storage inverter $T_2$ is set small.

In the static mode, the initial settings at step S106 are the same as in the dynamic mode except for settings $T_1 = t_1'$, $T_2 = t_2'$, $T_3 = t_3$. Accordingly, the settings made are $T_1 = t_1'$, $T_2 = t_2'$, $T_3 = t_3$ in the case $Y_1 < \overline{Y}$ shown in Fig. 11(d); $T_1 = t_1'$, $T_2 = t_2'$, $T_3 = t_3$ in the case $Y_2 \leq \overline{Y} < Y_1$ shown in Fig. 11(e); and $T_1 = t_1'$, $T_2 = t_2''$, $T_3 = t_3$ in the case $Y_2 > \overline{Y}$ shown in Fig. 11(f).

When the time interval $T_2$ of the $\phi$ROG transfer pulses and $\phi$SUB elimination pulses is changed, it will suffice to arrange is so that the application timings of the $\phi$ROG transfer pulses and $\phi$SUB elimination pulses serving as a reference are each varied by application frequency division, as in the manner of the first embodiment, for example.

In the first example described above, the total storage time in one field can be controlled by changing, independently or in combination, the first predetermined time $T_1$ up to the beginning of the initial storage operation in one field, the second predetermined time $T_2$ serving as the fine storage interval, and the predetermined time $T_3$ serving as the fine storage time. More specifically, $T_1$, $T_2$ and $T_3$ can be used upon being changed depending on the brightness of the subject, its condition and environment. In other words, the modes can beused appropriately in conformity with the subject, as described above, even if the exposure time of the CCD 11 is made the same.

In particular, enlarging $T_1$ shortens the time from the start to the end of storage in one field interval. As a result, an electronic shutter function can be achieved in which dynamic resolution neither deteriorates, even for a fast-moving subject, nor varies depending upon the scene.

(First Example not falling within the claims)

Next, an example of a method of changing $T_1$, $T_2$, $T_3$ in conformity with the condition of the subject will be described.

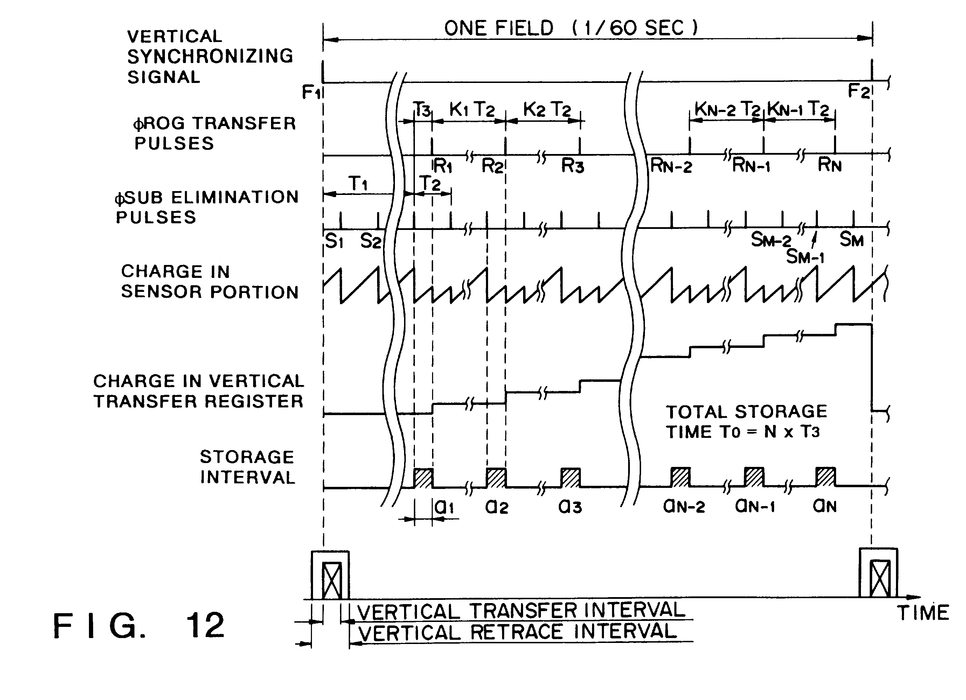

Fig. 12 is a timing chart illustrating the manner in which the CCD 11 is driven in this method. In this example, the interval at which the $\phi$ROG transfer pulses are applied in the timing chart of Fig. 8 is changed from $T_2$ to $K_jT_2$ (where $K_j$ is a positive integer), which is a whole-number multiple of $T_2$. More specifically, a change is made from a state in which an $\phi$ROG transfer pulse is applied whenever one $\phi$SUB elimination pulse is applied, to a state in which an $\phi$ROG transfer pulse is applied whenever several $\phi$SUB elimination pulses are applied.

As shown in Fig. 12, in response to application of a $\phi$ROG transfer pulse to the CCD 11 at time $F_1$, the electric charge accumulated in the sensor portion 1 up to the instant just prior to application of the aforementioned pulse is transferred from the sensor portion 1 to the vertical transfer register 2. One field interval of the charge is delivered from the vertical transfer register 2 to the memory 3 at a high speed in the vertical retrace interval (the interval during which the delivery of the charge is made is referred to as a "vertical transfer interval" in Fig. 12). Thereafter, at the intervals of a second predetermined time $T_2$, $\phi$SUB elimination pulses are applied to the CCD 11 M times in one field interval, as indicated by $S_1$, $S_2$, $\cdots$, $S_M$. The charge that has accumulated in the sensor portion 1 is swept out (eliminated) whenever a $\phi$SUB elimination pulse is generated.

Further, $\phi$ROG transfer pulses are applied to the CCD 11 at time intervals $K_1 \times T_2$, $K_2 \times T_2$, ..., $K_{N-1}1 \times T_2$ (where $K_1$, $K_2$, $\cdots$, $K_{N-1}$ are positive integers) in the course of one field interval following the point in time $F_1$, as indicated by $R_1$, $R_2$, $\cdots$, $R_N$, respectively. The $\phi$SUB elimination pulse immediately preceding the initial pulse $R_1$ is applied after a delay of a first predetermined time $T_1$ from the point in time $F_1$, as illustrated. A third predetermined time $T_3$, which is the time difference between the $\phi$SUB elimination pulses and the $\phi$ROG transfer pulses, is equivalent to each of the actual storage intervals $a_1$, $a_2$, $\cdots$, $a_N$ of the sensor.

In other words, the charge stored in the sensor portion 1 in the N-number of fine storage intervals $a_1$, $a_2$, $\cdots$, $a_N$ in one field interval is successively transferred to the vertical transfer register 2 by the $\phi$ROG transfer pulses $R_1$, $R_2$, $\cdots$, $R_N$ and is stored in each cell of the vertical transfer register 2.

Accordingly, the total sum of the charge (charge stored in the overall storage time $T_0 = N \times T_3$) produced in the sensor portion 1 in N-number of fine storage intervals each having the length of time $T_3$ in one field interval is added up in the vertical transfer register 2 and mixed, after which the charge is transferred vertically one time at high speed and stored in the memory 3.

The application timings of the $\phi$SUB elimination pulses $S_1$, $S_2$, $\cdots$, $S_M$ and $\phi$ROG transfer pulses $R_1$, $R_2$, $\cdots$, $R_N$ are set in, or in the proximity of, the horizontal retrace interval of a standard television signal. The reason for this is that noise would appear in the picture if the $\phi$SUB elimination pulses or #ROG transfer pulses were applied at a time other than that mentioned.

The charge stored in the memory 3 is subsequently transferred to the horizontal transfer register 4 and extracted as an output signal through the output amplifier 5. This process is similar to that of the interline transfer-type CCD of Fig. 1.

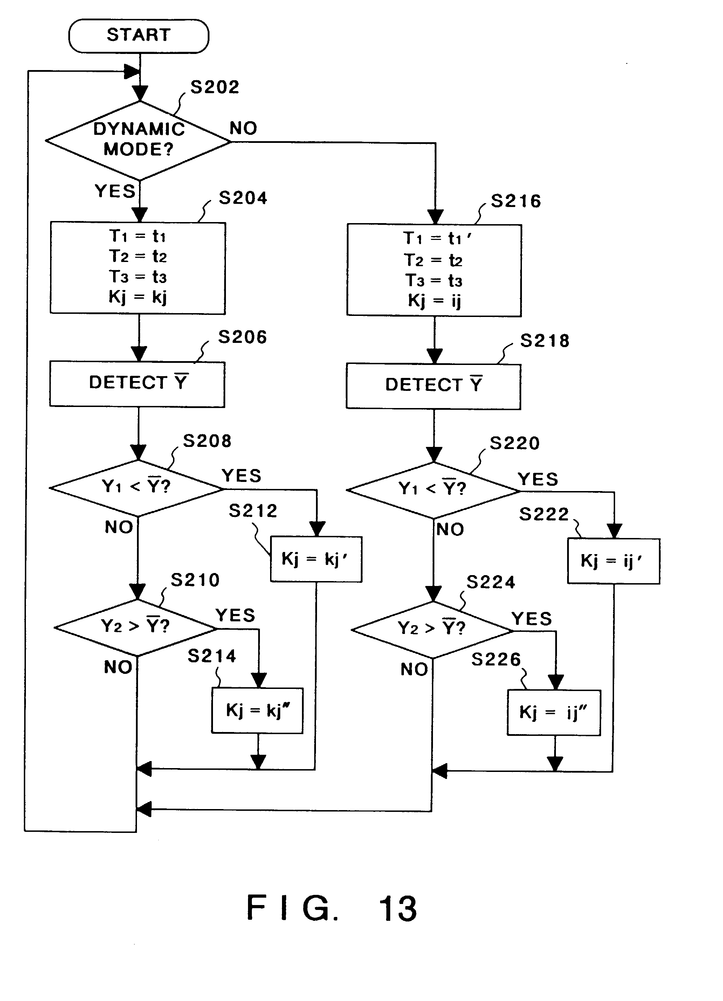

Fig. 13 is a flowchart illustrating the algorithm of the arithmetic circuit 14B according to this example (the first and second examples differ in terms of the algorithms of the arithmetic circuit 14B).

Step S202 of the flowchart calls for the arithmetic circuit 14B to determine whether the mode is the dynamic mode or static mode, based upon the output signal from the mode setting circuit 15B. If the decision rendered at step S202 is that the dynamic mode is in effect, the program proceeds to step S204, at which the arithmetic circuit 14B sets $T_1$, $T_2$, $T_3$, $K_j$ to $t_1$, $t_2$, $t_3$, $k_j$, respectively (where $k_j$ is a positive integer). This is followed by step S206.

Next, at step S206, the arithmetic unit 14B senses the magnitude of the averaged luminance signal $\overline{Y}$ from the averaging circuit 13, after which the program proceeds to step S208. Here the averaged luminance signal $\overline{Y}$ is compared with the a reference signal $Y_1$.

If the level of the averaged luminance signal $\overline{Y}$ is found to be greater than $Y_1$ at step S208, namely if the subject is bright, then the arithmetic circuit 14B sets $K_j$ to $k_j'$ ($k_j < k_j'$). On the other hand, if the level of the averaged luminance signal $\overline{Y}$ is found to be equal to or less than $Y_1$ at step S208, namely if the subject is of ordinary brightness or is dark, then the program proceeds to step S210.

The level of the averaged luminance signal $\overline{Y}$ is compared with a reference value $Y_2$ at step S210. If the level of the averaged luminance signal $\overline{Y}$ is found to be less than $Y_2$ ($Y_2 > \overline{Y}$) at step S210, namely if the subject is dark, then the arithmetic circuit 14B sets $K_j$ to $k_j''$ ($k_j > k_j''$).

If the level of the averaged luminance signal $\overline{Y}$ is found to be equal to or greater than the reference value $Y_2$ at step S210, namely if the subject is of ordinary brightness, then $T_1$, $T_2$, $T_3$ remain at the values set at step S204. Processing then returns to the beginning of the program.

If the decision rendered at step S202 is that the static mode is in effect, the program proceeds to step S216, at which the arithmetic circuit 14B sets $T_1$, $T_2$, $T_3$, $K_j$ to $t_1'$, $t_2$, $t_3$, $i_j$, respectively (where $i_j$ is a positive integer). This is followed by step S218. It should be noted that $t_1' < t_1$, $k_k < i_j$.

The reason for setting $T_1$ to be larger in the dynamic mode than in the static mode is as follows: Since the image would blur as in the manner of the strobe effect if $T_1$ were set to a small value with respect to a fast-moving subject, $T_1$ is set large to shorten the time from the start of charge storage to the end of charge storage of the sensor portion 1 in one field interval, thereby reducing blurring.

Next, at step S218, the arithmetic unit 14B senses the magnitude of the averaged luminance signal $\overline{Y}$ from the averaging circuit 13, after which the program proceeds to step S220. Here the level of the averaged luminance signal $\overline{Y}$ is compared with the reference value $Y_1$.

If the level of the averaged luminance signal $\overline{Y}$ is found to be greater than $Y_1$ at step S220, namely if the subject is bright, then the program proceeds to step S220 and the arithmetic circuit 14B sets $K_j$ to $i_j'$ ($i_j < i_j'$). On the other hand, if the level of the averaged luminance signal $\overline{Y}$ is found to be equal to or less than $Y_1$ at step S220, namely if the subject is of ordinary brightness or is dark, then the program proceeds to step S224.

The level of the averaged luminance signal $\overline{Y}$ is compared with a reference value $Y_2$ at step S224. If the level of the averaged luminance signal $\overline{Y}$ is found to be less than $Y_2$ ($Y_2 > \overline{Y}$) at step S224, namely if the subject is dark, then the arithmetic circuit 14B sets $K_j$ to $i_j''$ ($i_j > i_j''$).

If the level of the averaged luminance signal $\overline{Y}$ is found to be equal to or greater than the reference value $Y_2$ at step S224, namely if the subject is of ordinary brightness, then $T_1$, $T_2$, $T_3$, $K_j$ remain at the values set at step S216. Processing then returns to the beginning of the program.

Photography is carried out by repeating the foregoing operation for every field.

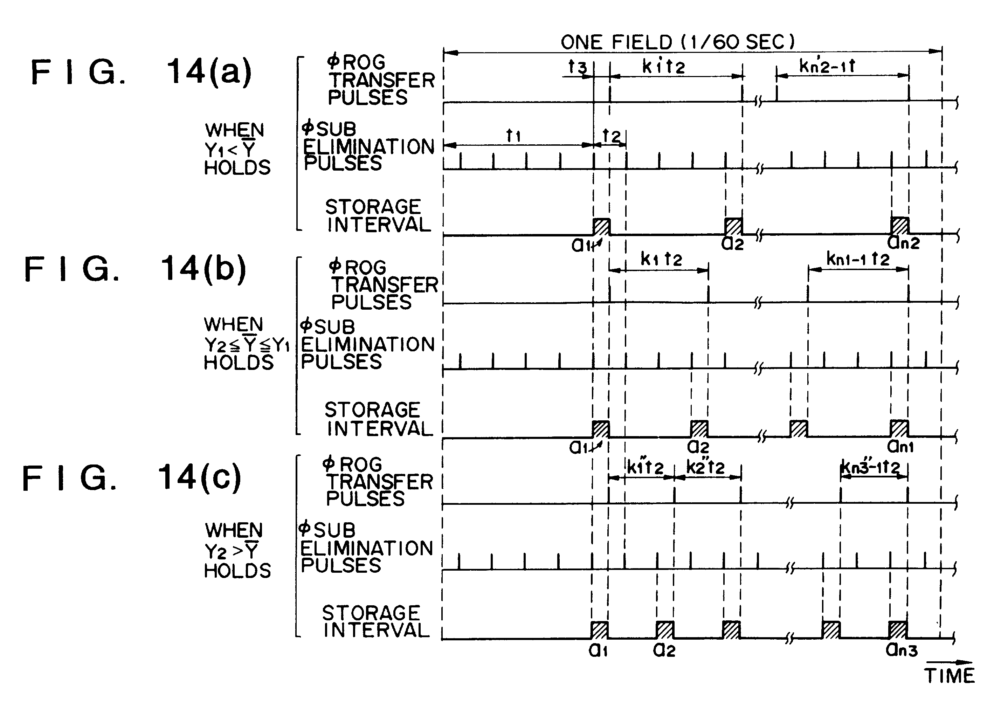

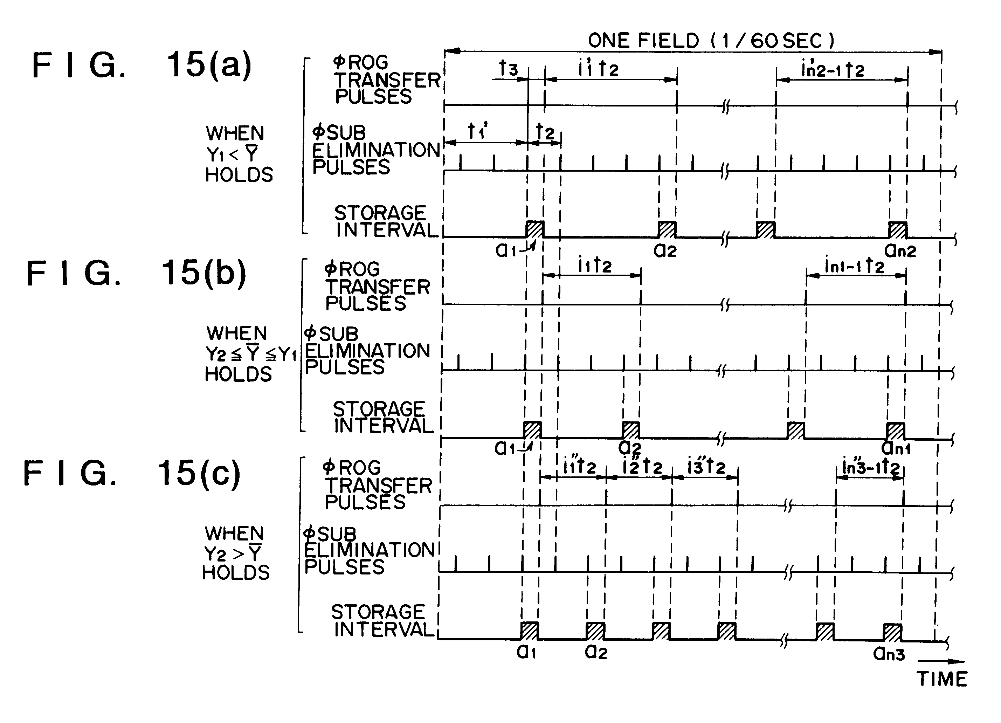

Figs. 14 and 15 are timing charts in which $T_1$, $T_2$, $T_3$ and Kj set by the arithmetic circuit 14B are illustrated for each mode. Fig. 14 is for the dynamic mode and Fig. 15 for the static mode.

Fig. 14(a) illustrative of the dynamic mode is for the case where Y1 < $\overline{Y}$ holds, namely for when the subject is bright. $T_1$, $T_2$, $T_3$ and $K_j$ are set to $t_1$, $t_2$, $t_3$ and $k_j$, respectively. In other words, the storage interval is lengthened and the number N of storage operations in one field interval is decreased, i.e., made $n_2$ ($n_2 < n_1$), thereby reducing the total storage time $T_0 = n_2 \times t_3$.

Fig. 14(b) is for the case where Y2 ≤ $\overline{Y}$ ≤Y₁ holds, namely for when the subject is of ordinary brightness. $T_1$, $T_2$, $T_3$ and $K_j$ are left in the state set at the beginning of the algorithm, i.e., $T_1 = t_1$, $T_2 = t_2$, $T_3 = t_3$, $K_j = k_j$. The number N of storage operations in one field interval

becomes $N = n_1$ at this time.

Fig. 14(c) is for the case where $Y_2 > \overline{Y}$ holds, namely for when the subject is dark. $T_1$, $T_2$, $T_3$ and $K_j$ are set at $t_1$, $t_2$, $t_3$ and $k_j$, respectively. In other words, the storage interval is shortened and the number N of storage operations in one field interval is increased, i. e., made $n_3$ ($n_3 > n_1$), thereby increasing the total storage time $T_0 = N \times t_3$.

With regard to the static mode of Fig. 15, the initial settings of $T_1$, $T_2$, $T_3$ and $K_j$ are the same as in the dynamic mode except for settings $T_1 = t_1'$, $T_2 = t_2$, $T_3 = t_3$ and $K_j = i_j$. Accordingly, the settings made are $T_1 = t_1'$, $T_2 = t_2$, $T_3 = t_3$ and $K_j = i_j'$ ($i_j < i_j'$) in the case $Y_1 < \overline{Y}$ shown in (a); $T_1 = t_1'$, $T_2 = t_2$, $T_3 = t_3$ and $K_j = i_j$ in the case $Y_2 \leq \overline{Y} \leq Y_1$ shown in (b); and $T_1 = t_1'$, $T_2 = t_2$, $T_3 = t_3$, $K_j = i_j''$ ($i_j > i_j''$) in the case $Y_2 > \overline{Y}$ shown in (c).

In the method described above, the total storage time $T_0 = N \times T_3$ can be controlled by changing the storage interval ($K_j \times T_2$) (where $K_j$ is a positive integer) to vary the number N of storage operations in one field interval. More specifically, storage time can be used upon being changed depending on the brightness of the subject, its condition and environment.

Further, by varying the time $T_1$, which extends up to the beginning of storage in one field, in conformity with the moving speed of the subject, an electronic shutter function can be achieved in which dynamic resolution neither deteriorates, even for a fast-moving subject, nor varies depending upon the scene.

Thus, as described above, storage of electric charge is carried out in dispersed fashion in one field interval so that dynamic resolution can be held constant. Furthermore, by providing modes having different numbers of storage operations in dependence upon brightness, the same overall storage time can be controlled to make possible an error correction suited to the condition of the subject

(Second Example not falling within the claims)

Next, an example of a method of changing $T_1$, $T_2$, $T_3$ in conformity with the condition of the subject will be described. According to third example, $T_1$, $T_2$ and $T_3$ are set exactly as in the example shown in Figs. 12, 14 and 15 in the operation for the ordinary photographic state. Operation according to this example differs from that of the example shown in Figs. 12, 14 and 15 only for a case where the subject is extremely bright.

In this example, the arithmetic circuit 14B constituting the video camera shown in Fig. 9 has a first driving mode and a second driving mode. The second driving mode is suitable for the case where the subject is extremely bright, and the first driving mode is suitable for other brightnesses. The changeover between the first and second driving modes is performed automatically by a decision made in the arithmetic circuit 14B in such a manner that the second mode is selected when the output signal $\overline{Y}$ from the averaging circuit 13 satis-

fies the relation $\bar{Y} > Y_0$ and the first driving mode is selected at all other times.

The flowchart of operation of the first driving mode in the arithmetic circuit 14B is exactly the same as the flowchart of the example shown in Fig. 13.

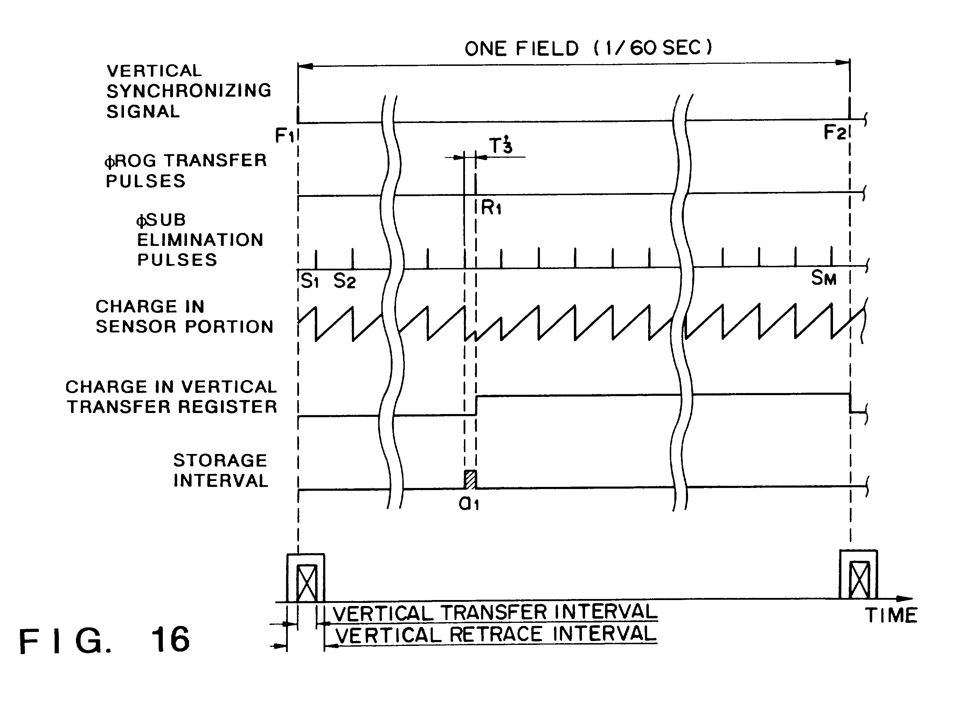

Fig. 16 is a diagram illustrating the operation of the second driving mode. In the flowchart (Fig. 13) of the first driving mode of arithmetic circuit 14B, the $\phi$ROG transfer pulses are reduced with an increase in the brightness of the subject. As a result, the number N of storage operations in one field interval is reduced and the output of the output amplifier 5 of CCD 11 is rendered constant.

However, in case of an extremely bright subject, namely when the level of the averaged luminance signal $\bar{Y}$ is greater than $Y_0$ (the threshold level of brightness), there are occasions when the output of the output amplifier 5 becomes excessively large even if the number N of storage operations in one field interval is one. In such a case, the second mode shown in Fig. 16 is selected within the arithmetic unit 14B, and storage time is set to be short, i.e., $T_3 = T_3'$ ($T_3' < T_3$).

In the method described above, the total storage time $T_0 = N \times T_3$ can be controlled by changing the storage interval ($K_j \times T_2$) (where $K_j$ is a positive integer) to vary the number N of storage operations in one field interval. More specifically, storage time can be used upon being changed depending on the brightness of the subject, its condition and environment.

Further, by varying the time $T_1$, which extends up to the beginning of storage in one field, in conformity with the moving speed of the subject, an electronic shutter function can be achieved in which dynamic resolution neither deteriorates, even for a fast-moving subject, nor varies depending upon the scene.

Furthermore, by providing the first driving mode in which storage time $T_3$ is rendered constant and the second driving mode in which storage time $T_3$ is varied in conformity with an extremely bright subject, the various conditions of a subject can be dealt with very flexibly.

(Third Example not falling within the claims)

Next, a third example of a method of changing $T_1$, $T_2$, $T_3$ in conformity with the condition of the subject will be described. According also to this example, $T_1$, $T_2$ and $T_3$ are set exactly as in the example shown in Figs. 12, 14 and 15 in the operation for the ordinary photographic state. As in the second example not falling within the claims, operation according to this example differs from that of the example shown in Figs. 12, 14 and 15 only for a case where the subject is extremely bright.

In this example, the arithmetic circuit 14B constituting the video camera shown in Fig. 9 has a first driving mode and a second driving mode (which differ from the first and second driving modes of the third example). The second driving mode is suitable for a case where the the number N of storage operations in one field interval is less than a predetermined value $N_1$, and the first driving mode is suitable for all other cases. The changeover between the first and second driving modes is performed automatically in the arithmetic circuit 14B which discriminates the number N of storage operations in one field interval.

The flowchart of operation of the first driving mode in the arithmetic circuit 14B is exactly the same as the flowchart of the example shown in Fig. 13.

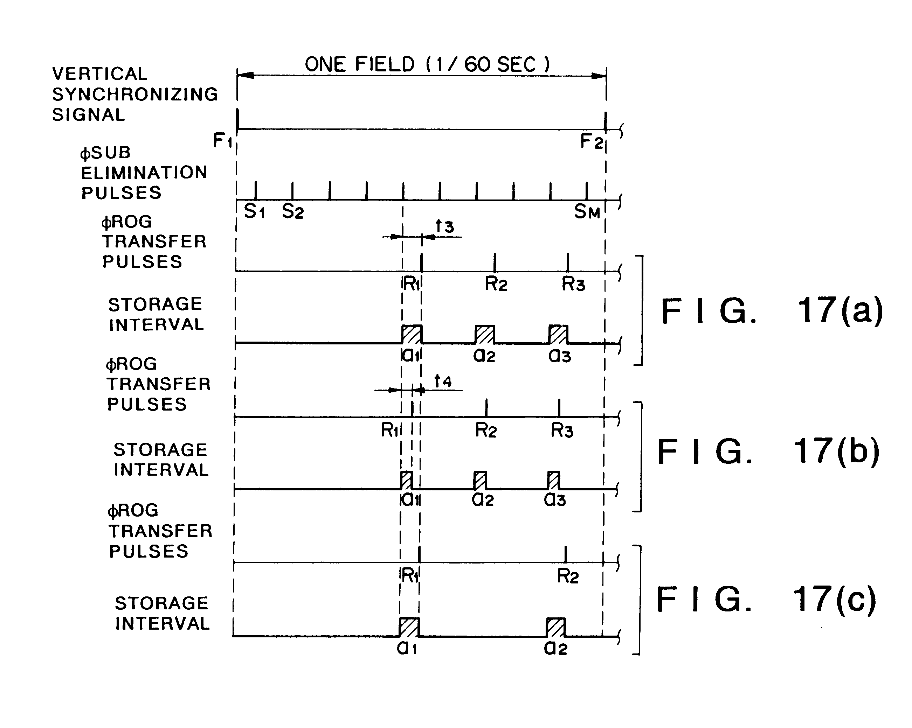

Fig. 17 is a diagram illustrating the operation of the second driving mode. In the flowchart (Fig. 13) of the first driving mode of arithmetic circuit 14B, the $\phi$ROG transfer pulses are reduced with an increase in the brightness of the subject. As a result, the number N of storage operations in one field interval is reduced and the output of the output amplifier 5 of CCD 11 is rendered constant.

However, in case of an extremely bright subject, the number N of storage operations in one field interval becomes small and the output of the output amplifier 5 undergoes a large change merely by a change of one in the number N. In such case, the fact that the number N of storage operations in one field interval has become smaller than a predetermined value $N_1$ (e.g., $N_1 = 5$) is detected in the arithmetic circuit 14B, and the second driving mode is selected.

In the second driving mode, as shown in Fig. 17, when the number N of storage operations changes from, say, N=3 to N=2, the number N and the storage time $T_3$ are controlled in such a manner that the change in the total storage time $T_0 = N \times T_3$ in one field interval is rendered continuous from the state $T_3 = t_3$, N=3 shown in (a), then temporarily to the state $T_3 = t_4$ ($t_4 < t_3$), N=3 shown in (b), and finally to the state $T_3 = t_3$, N=2 shown in (c). An example in which the number N of storage operations decreases has been described in connection with Fig. 17. In a case where N increases, the change in the total storage time T0 is rendered continuous in the same manner once a setting $T_3 = t_4'$ ($t_4' > t_3$) has been made.

In the method described above, the total storage time $T_0$ of one field can be controlled by changing the storage interval ($K_j \times T_2$) (where $K_j$ is a positive integer) to vary the number N of storage operations in one field interval. More specifically, storage time can be used upon being changed depending on the brightness of the subject, its condition and environment.

Further, by varying the time $T_1$, which extends up to the beginning of storage in one field, in conformity with the moving speed of the subject, an electronic shutter function can be achieved in which dynamic resolution neither deteriorates, even for a fast-moving subject, nor varies depending upon the scene.

Furthermore, by providing the first driving mode in which storage time $T_3$ is rendered constant and the second driving mode in which storage time $T_3$ is varied in conformity with an extremely bright subject, the various conditions of a subject can be dealt with very flexibly.

(Third Embodiment)

In the first and second embodiments, examples of a method (referred to as multiple exposure) in which storage times are dispersed in one field interval are illustrated. A video camera according to a third embodiment has a first driving mode for performing multiple exposure and a second driving mode (the conventional electronic shutter operation) for performing storage of charge continuously one time.

With regard to the first driving mode, operation is exactly the same as that of the first embodiment and need not be described again. Furthermore, the construction of the video camera to which the third embodiment is applied is the same as that of the first embodiment. However, the changeover between the first and second driving modes is performed by the mode setting circuit 15A.

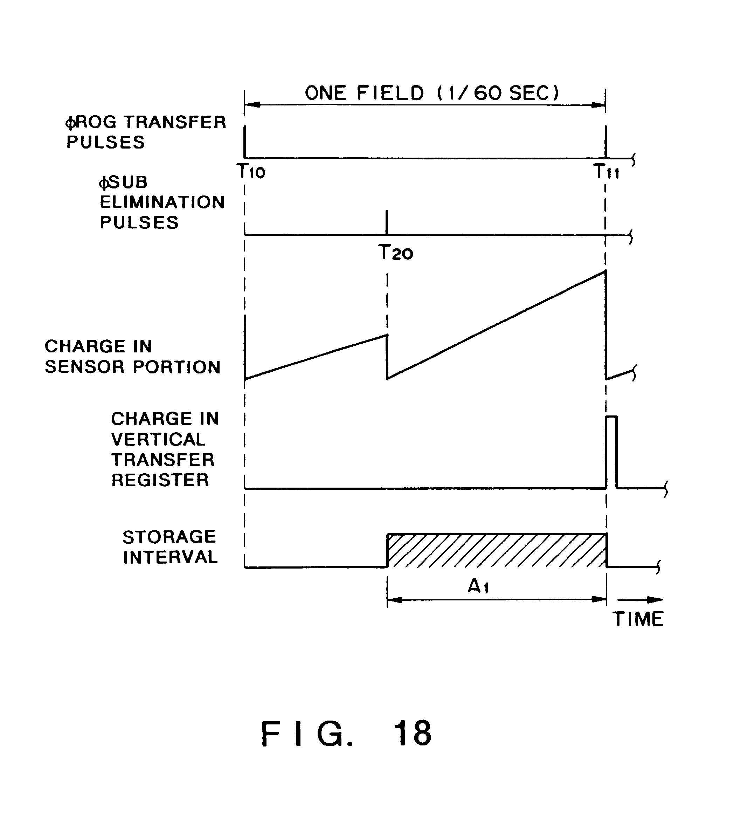

A method through which the operation (the conventional electronic shutter operation) of the second driving mode is realized by the CCD 11 used in this embodiment will be described with reference to Fig. 18.

As illustrated in Fig. 18, the $\phi$ROG transfer pulses are applied to the CCD 11 one at a time ($T_{10}$, $T_{11}$, $\cdots$) in one field interval, and the $\phi$SUB elimination pulses are applied to the CCD 11 one at a time ($T_{20}$, $\cdots$) in the interval between the $\phi$ROG transfer pulses.

As a result of the foregoing, the sweep-out (elimination) and storage of charge are performed one after another in one field interval. Accordingly, the sum total of the charge produced in the sensor portion 1 over the charging interval $A_1$ comes to be stored in the vertical transfer register 2 immediately after the interval at which the $\phi$ROG transfer pulse is at the "H" level ends at time $T_{11}$.

Next, the use of the first driving mode (the multiple-exposure mode) and the second driving mode (the conventional electronic-shutter mode) will be described.

In the first driving mode (the multiple-exposure mode), the storage times are evenly distributed discretely in one field interval, as illustrated in Fig. 6. Therefore, this mode is very useful since there is no change in dynamic resolution with regard to a subject whose brightness undergoes a large change with time. Conversely, however, a time difference approximating 1/60 of a second develops between the subject which receives light at storage interval $a_1$ and the subject which receives light at storage interval $a_n$. Consequently, dynamic resolution declines for a fast-moving subject. In addition, though the conventional electronic-shutter mode possesses the above-described drawbacks, the change in dynamic resolution is not very pronounced with regard to a subject exhibiting little change in brightness with time and moving at high speed, and a picture having good dynamic resolution can be taken.

Accordingly, if it is so arranged that the multiple-exposure mode is selected in cases where the subject is slow-moving or its change in brightness is large, and the conventional electronic-shutter mode is selected in a case where subject brightness undergoes a small change with time and is fast-moving, a picture having good dynamic resolution can be taken with little variation in dynamic resolution.

It is possible to execute both the multiple-exposure operation and the conventional electronic shutter operation also in the second embodiment described above. However, $T_1$, $T_2$, $T_3$ must be decided separately in the second embodiment, and this is laborious in terms of control. By contrast, labor involved in control is reduced and the circuit arrangement simplified if, as in the third embodiment, it is so arranged that a subject moving in the ordinary slow manner is dealt with using the multiple-exposure mode, in which exposure intervals are distributed over the entirety of one field interval, while a fast-moving subject is dealt with using the conventional electronic shutter operation. Accordingly, a device such as a video camera employing this embodiment can be reduced in cost.

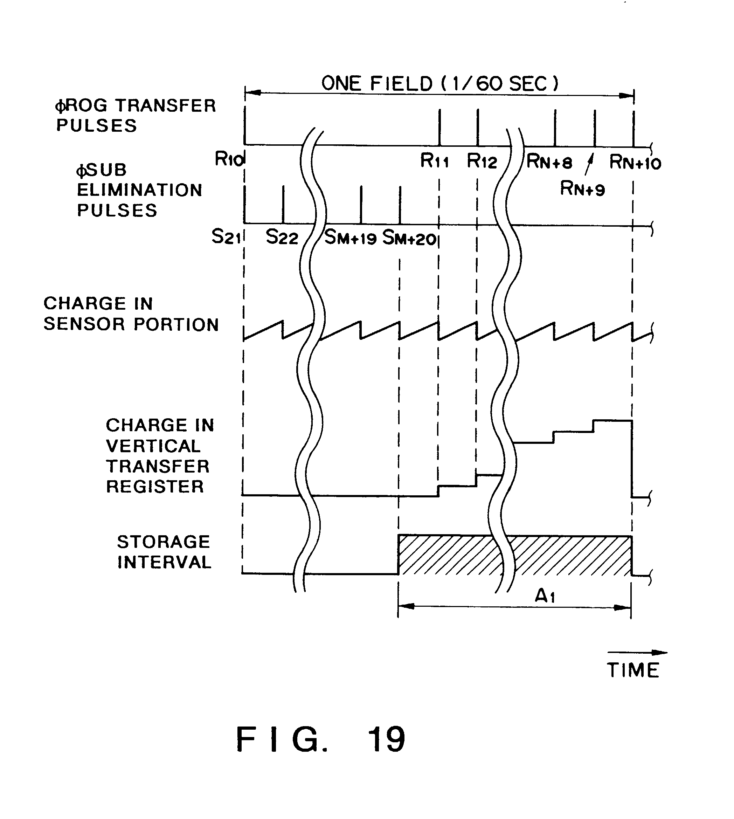

In the third embodiment, it has been described that one $\phi$ROG transfer pulse and one $\phi$SUB elimination pulse are applied in one field interval in case of the conventional electronic shutter operation. However, as shown in Fig. 19, an arrangement may be adopted in which $\phi$SUB elimination pulses $S_{21}$, $\cdots$, $S_{M+20}$, which end before $\phi$ROG transfer pulses $R_{11}$, $\cdots$, $F_{N+10}$ that are applied in the middle of one field interval, are applied to the CCD 11. The storage interval is $A_1$, as set forth earlier, and the effects obtained are the same as those obtained in the case of Fig. 18.

Thus, a mode for exposure control in which a predetermined number of storage times are distributed evenly at predetermined times in one field interval, and a conventional electronic-shutter mode in which prescribed continuous exposure-time control is performed in one field interval, can be realized merely by changing the control of drive using the same solid-state image sensor. Accordingly, by making appropriate use of either of these two modes or by using them in combination, it is possible to perform exposure control suited to the condition of the subject and the purpose of photography.

(Fourth Embodiment)

A video camera to which a fourth embodiment is applied has a first driving mode for performing the operation illustrated in the second embodiment and a second driving mode for performing the operation of the conventional electronic shutter.

The operation of the first driving mode is exactly the same as that of the second embodiment shown in Fig. 12 and need not be described again. Furthermore, operation for a case where the function of the conventional electronic shutter is implemented using the CCD employed in this embodiment is as set forth in connection with third embodiment and need not be described again.

If overall storage time $T_0$ for the case where the operation (first driving mode) of the second embodiment is performed is compared with overall storage time for the case where the conventional electronic shutter operation (second driving mode) is performed, it will be found that overall storage time in one field interval according to the second drive mode is as follows, as illustrated in Fig. 18:

$$T_0' = (T_{11} - T_{20}) \qquad (1)$$

and that overall storage time in one field interval according to the first drive mode is as follows, as illustrated in Fig. 12:

$$T_0 = (N \times T_3) \qquad (2)$$

In addition, the time during which exposure is not performed in one field interval is as follows in the second driving mode:

$$T_{NON}' = (T_{20} - T_{10}) \qquad (3)$$

and as follows in the first driving mode:

$$T_{NON} = T_1 + (N-1)$$

$$\times \{(k \times T_2) - T_3\} \qquad (4)$$

More specifically, it is known that the total exposure time $T_0$ in the second driving mode is decided by the number (N) of times exposure is performed and the storage time $T_3$. In addition, it is known from Fig. 12 that dynamic resolution is decided by the time from the beginning to the end of dispersed storage in one field interval, and therefore by $T_1$.

In the first driving mode, an operation in which storage is performed in dispersed fashion in one field interval (referred to as multiple exposure) is carried out, whereby the amount of exposure (overall exposure time $T_0$) can be controlled while holding $T_1$ constant. As a result, excellent exposure control in which dynamic exposure does not change can be achieved.

When it is desired to change dynamic resolution deliberately, as when analyzing one's form in a sports activity, using the conventional-method of electronic-shutter drive, there are occasions where the dynamic resolution changes suddenly to produce an unnatural picture in a case where a changeover is made from the first driving mode (multiple-exposure operation) to the second driving mode (the conventional electronic shutter operation), or vice versa.

Accordingly, in the fourth embodiment, it is so arranged that a sudden change in dynamic resolution is suppressed when changing over between the first and second driving modes.

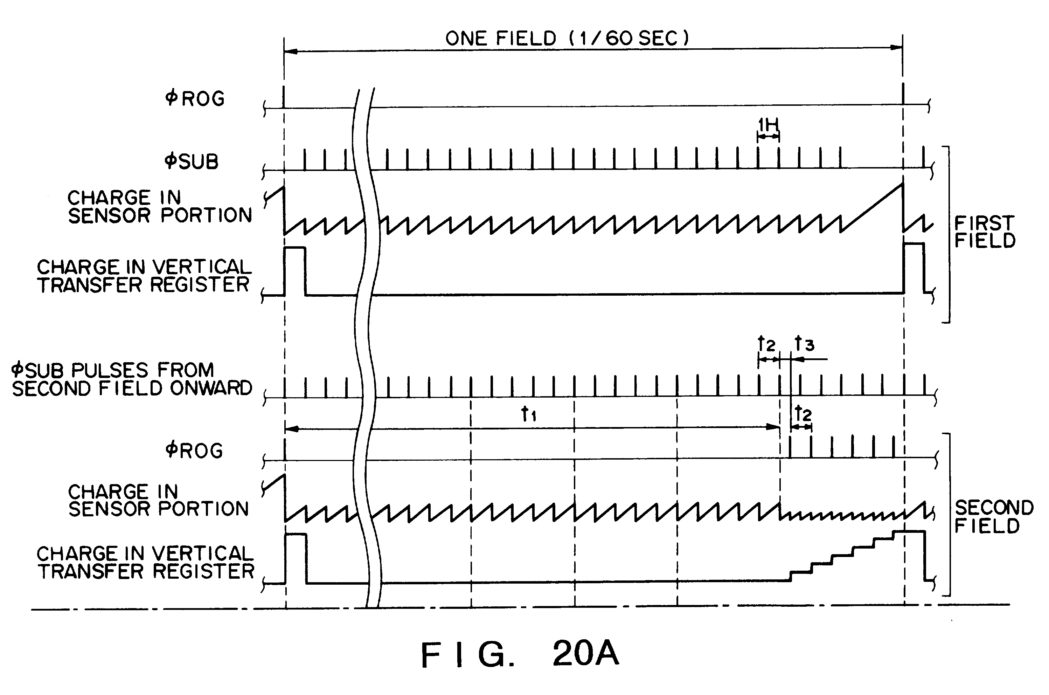

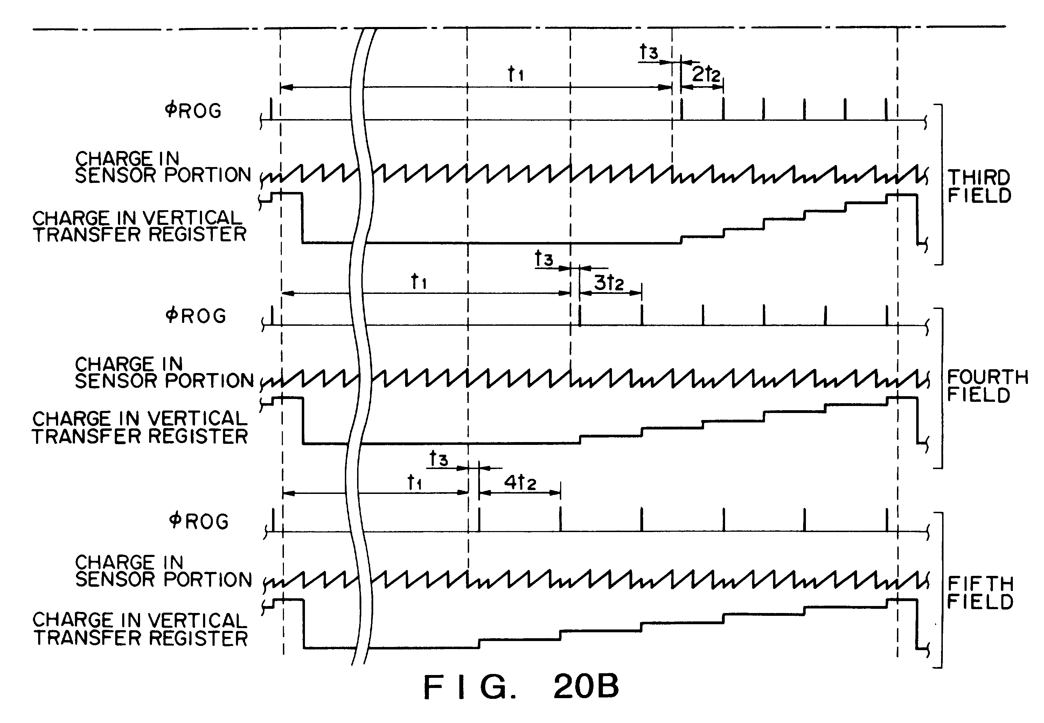

Fig. 20, which is a diagram for describing an operation through which a sudden change in dynamic resolution is suppressed, illustrates a case where a changeover is made from the second driving mode (the conventional electronic shutter operation) to the first driving mode (the multiple-exposure operation).

A first field in Fig. 20 is for the conventional electronic shutter drive. Here electric charge is stored continuously for only the last 3H of the field.

The $\phi$SUB pulses from the second field onward are applied continuously a a time interval $t_2$, where $t_2$ = 1H. In the second field, the multiple-exposure operation is employed, and storage of charge is performed six times intermittently over the last 5.5H of the second field, with $K_j = 1$ in Fig. 12. Here the time $t_3$ satisfies the relation $t_3 = 1/2H$, and therefore the overall storage time $T_0$ in one field interval is 6 x 1/2H = 3H. Thus the overall storage time $T_0$ is the same as that of the first field.

Similarly, storage of charge is performed six times intermittently over 10.5H in the third field, 15.5H in the fourth field and 20.5H in the fifth field. If storage of charge is performed intermittently over $\{(n-1) \times 5 + 0.5\}$H in the $n^{th}$ field from the sixth field onward as well, dynamic resolution can be changed gradually while maintaining the same exposure time, until the interval over which charge is intermittently stored takes on the maximum value in one field.

In a case where a changeover is made from the first driving mode (the multiple-exposure operation) to the second driving mode (the conventional electronic exposure operation), a sudden change in dynamic exposure can be suppressed in a similar manner if operation which is the reverse of the foregoing is carried out.

Thus, in accordance with the fourth embodiment, as described above, storage intervals are distributed evenly in dispersed fashion in one field interval, whereby it is possible to perform exposure control, which provides a natural appearance, by the solid-state image sensor itself, without the observer being made aware of a change in dynamic resolution.

In a case where dynamic resolution is changed deliberately, exposure control providing a natural appearance can be performed, without the observer being made aware of the change in dynamic resolution when the changeover is made from the conventional electronic shutter operation to the multiple-exposure mode, by gradually varying the distribution of storage times in one field interval.

The present invention can be modified in various ways without departing from the scope of the claims.

For example, though one field interval is 1/60 of a second in the foregoing embodiments, the invention is not restricted to this time. In addition, the invention may be applied not only to a two-dimensional sensor but also to a one-dimensional sensor.

In the fourth embodiment, the relation $t_3/1/2H$ is described as holding. However, the time may be set to, e.g., 1/3H, 1/4H, etc.

The present invention is not limited to the above embodiments and various changes and modifications can be made within the scope of the present invention. Therefore, to apprise the public of the scope of the present invention, the following claims are made.

**Claims**

1. An image sensing apparatus comprising:

image sensing means (1) for carrying out a plurality of intermittent charge accumulating operations for each pixel of an image to produce a plurality of photoelectric signals; and
means (2) for summing the plurality of photoelectric signals representing a pixel over a sum total ($T_0$) accumulation period for that pixel, characterised by
control means (15A) for changing the temporal distribution pattern of the plurality of intermittent accumulating operations without changing the sum total ($T_0$) accumulation period.

2. An apparatus according to claim 1, wherein the control means is arranged to change an interval between the intermittent accumulating operations.

3. An apparatus according to claim 1 or 2, wherein the control means is arranged to change the number of intermittent accumulating operations.

4. An apparatus according to claim 1, 2 or 3, wherein the control means is arranged to control the time $T_1$ from a vertical synchronising signal to a first one of the plurality of accumulating operations.

5. An apparatus according to claim 1, wherein the control means (15A) is arranged, in one field interval, to vary independently or in association a time $T_1$ from a vertical synchronising signal to a first one of the plurality of accumulating operations, a periodic time $T_2$ after the vertical synchronising signal at which charge is eliminated from the sensing means prior to the next accumulating operation and a periodic time $T_3$ after each time $T_2$ at which the charge stored by the sensing means is read as a photoelectric signal by the summing means.

6. An apparatus according to claim 5, wherein the control means (15A) is arranged to cause the periodic time $T_3$ to decrease when the number of accumulating operations increases and to cause the periodic time $T_3$ to increase when the number of accumulating operations decreases.

7. An apparatus according to claim 1, wherein the control means is arranged to control independently a photoelectric conversion interval over which the plurality of accumulating operations are carried out, an accumulating operation starting timing and a charge elimination operation of the sensing means; the control means being arranged to perform the accumulating and charge elimination operations a plurality of times in one field interval.

8. An apparatus according to any one of the preceding claims, wherein the control means (15A) is arranged to select either one of first and second driving modes having different distribution patterns of accumulation operations but the same total accumulation period.

9. An apparatus according to claim 1, wherein the control means is adapted to select either a first driving mode for obtaining a predetermined total storage time $T_0 = N_1 \times T_3$ by performing charge storage in distributed fashion a predetermined plurality of times $N_1$ for a predetermined time interval $T_3$ each time or a second driving mode in which, in order to obtain the same total storage time $T_0$, storage is performed $N_2$ times, which differs from $N_1$ in the first driving mode, and the interval for each dispersed storage operation is made $T_3'$ (where $T_0 = N_2 \times T_3'$).

10. An apparatus according to claim 1, wherein the control means (15A) is adapted to select between a first driving mode in which, in one field interval, charge is eliminated from the sensing means (1) at a first periodic timing after a vertical synchronising signal, and the information from the sensing means (2) is read by the summing means (2) at a second periodic timing which has a period identical with that of the first periodic timing but which lags behind the first periodic timing by a predetermined time $T_3$; and
a second driving mode in which, in one field interval, charge is eliminated from the sensing means (1) at a third periodic timing obtained by dividing the first periodic timing using a predetermined frequency-dividing ratio, and information from the sensing means (1) is read from the summing means (2) at a fourth periodic timing obtained by dividing the second periodic timing at a frequency-dividing ratio identical with the first-mentioned frequency-dividing ratio.

11. An apparatus according to claim 1, wherein the control means (15A) is arranged to select between a first driving mode in which, in one field interval, information from the sensing means (1) is read by the summing means (2) a predetermined time after the end of each one of plural operations to eliminate charge from the sensing means (1); and

a second driving mode in which, in one field interval, information from the sensing means (1) is read by the summing means (2) after completion of all charge elimination operations in one field interval.

12. An apparatus according to claim 1, wherein the control means (15A) is arranged to select either a first or a second driving mode, the first driving mode being arranged to obtain a predetermined total storage time by performing storage in dispersed fashion a plurality of times, and the second driving mode being arranged to obtain the same predetermined total storage time by performing continuous charge storage for a predetermined time; the control means (15A) being arranged to cause the interval between the predetermined number of storage operations and the timing of the beginning of storage to be gradually changed at a change over between said first driving mode and said second driving mode, with the total storage time being held constant.

13. An apparatus according to claim 1, wherein the control means (15A) is arranged to select either a first driving mode in which, in one field interval, operation of elimination of charge in the sensing means (1) is performed each second predetermined time $t_2$ after a first predetermined time $t_1$ from a vertical synchronising signal, and the information from said sensing means is read by the summing means (2), at each one of a predetermined number n of the charge elimination operations at a third predetermined time $t_3$ after the end of each charge elimination operation; or a second driving mode in which, in one field interval, the information from the sensing means (1) is read by the summing means (2) after completion of all charge elimination operations in one field interval; the control means being arranged to cause the first predetermined time $t_1$ and predetermined number of times n to change gradually when said first driving mode and said second driving mode are changed over, with the total storage time being held constant.

14. An apparatus according to any one of claims 8 to 13, wherein means (12,13,14A) are provided for determining the brightness of the image and wherein the control means (15A) is adapted to vary the total accumulation period ($T_0$) in accordance with the brightness of the image with the total accumulation period ($T_0$) in the first and second driving periods modes the same for a given illumination.

15. An apparatus according to claim 14, wherein the control means (15A) is arranged to vary duration of the accumulating operations and/or the number of accumulating operations in accordance with the determined brightness.

16. An apparatus according to any one of the preceding claims, wherein the timing at which charge is moved from the sensing means to the summing means (2) and the timing at which charge is eliminated from the sensing means (1) fall within a horizontal retrace interval, or in the proximity thereof, of a standard television signal.

17. An apparatus according to any one of the preceding claims, wherein the summing means (2) includes a vertical transfer register.

18. An apparatus according to any one of the preceding claims, further comprising memory means (3) for storing an output from the summing means (2), the memory means having enough capacity for storing one field of a signal charge.

19. An apparatus according to any one of the preceding claims, wherein the sensing means (1) includes a plurality of photoelectric converting portions arranged in columns and rows.

20. A method of operating an image sensing apparatus which comprises controlling image sensing means (1) to cause the image sensing means to carry out a plurality of intermittent charge acumulating operations for each pixel of an image to produce a plurality of photoelectric signals and summing the plurality of photoelectrice signals representing a pixel to produce a sum total ($T_o$) accumulation period for that pixel, characterised by

changing the temporal distribution pattern of the plurality of intermittent accumulating operations without changing the sum total ($T_o$) accumulation period.

21. A method according to claim 21, which comprises varying the distribution pattern by varying any one or more of the duration of each accumulation operation, the number of accumulation operation and the timing of the first accumulation operation.

22. A method according to claim 20 or 21, which comprises varying the distribution pattern by selecting either a first driving mode providing a first temporal distribution pattern for the plurality of intermittent accumulating operations or a second driving mode providing a second different temporal distribution pattern for the plurality of intermittent accumulating operations.

23. A method according to claim 22, which comprises determining the brightness of an image and varying the total accumulation period in accordance with the determined brightness so that the total accumulation period for a given brightness or illumination is the same in the first and second driving modes.

## Patentansprüche

1. Bildabtastgerät mit:

   einer Bildabtasteinrichtung (1) zum Ausführen mehrerer intermittierender Ladungsakkumulationsoperationen für jedes Pixel eines Bildes, um mehrere photoelektrische Signale zu erzeugen; und

   einer Einrichtung (2) zum Summieren der mehreren ein Pixel repräsentierenden photoelektrischen Signale über eine Gesamtakkumulationsdauer ($T_0$) für dieses Pixel,

   **gekennzeichnet durch:**
   eine Steuereinrichtung (15A) zum Verändern des temporären Verteilungsmusters der mehreren intermittierenden Akkumulationsoperationen ohne Veränderung der Gesamtakkumulationsdauer ($T_0$).

2. Gerät nach Anspruch 1, wobei die Steuereinrichtung dafür eingerichtet ist, ein Intervall zwischen den intermittierenden Akkumulationsoperationen zu verändern.

3. Gerät nach Anspruch 1 oder 2, wobei die Steuereinrichtung dafür eingerichtet ist, die Anzahl intermittierender Akkumulationsoperationen zu verändern.

4. Gerät nach Anspruch 1, 2 oder 3, wobei die Steuereinrichtung dafür eingerichtet ist, die Zeit $T_1$ von einem vertikalen Synchronisationssignal bis zu einer ersten von den mehreren Akkumulationsoperationen zu steuern.

5. Gerät nach Anspruch 1, wobei die Steuereinrichtung (15A) dafür eingerichtet ist, in einem Halbbildintervall unabhängig oder in Zuordnung zu einer Zeit $T_1$ von einem vertikalen Synchronisationssignal bis zu einer ersten von den mehreren Akkumulationsoperationen eine Periodenzeit $T_2$ nach dem vertikalen Synchronisationssignal, bei welcher Ladung aus der Abtasteinrichtung vor der nächsten Akkumulationsoperation entfernt wird, und eine Periodenzeit $T_3$ nach jeder Zeit $T_2$, bei welcher die von der Abtasteinrichtung gespeicherte Ladung als ein photoelektrisches Signal von der Summierungseinrichtung gelesen wird, zu verändern.

6. Gerät nach Anspruch 5, wobei die Steuereinrichtung (15A) dafür eingerichtet ist, eine Verkürzung der Periodenzeit $T_3$ zu bewirken, wenn die Anzahl von Akkumulationsoperationen ansteigt, und eine Verlängerung der Verkürzung der Periodenzeit $T_3$ zu bewirken, wenn die Anzahl von Akkumulationsoperationen fällt.

7. Gerät nach Anspruch 1, wobei die Steuereinrichtung dafür eingerichtet ist, unabhängig ein photoelektrisches Umwandlungsintervall, in welchem die mehreren Akkumulationsoperationen ausgeführt werden, einen Startzeitpunkt der Akkumulationsoperation und eine Ladungsentfernungsoperation der Abtasteinrichtung zu steuern; wobei die Steuereinrichtung so eingerichtet ist, daß sie die Akkumulations- und Ladungsentfernungsoperationen mehrere Male in einem Halbbildintervall durchführt.

8. Gerät nach einem der vorstehenden Ansprüche, wobei die Steuereinrichtung (15A) dafür eingerichtet ist, jeden von den ersten und zweiten Betriebsmodi mit unterschiedlichen Verteilungsmustern der Akkumulationsoperationen aber derselben Gesamtakkumulationsdauer zu selektieren.

9. Gerät nach Anspruch 1, wobei die Steuereinrichtung dafür angepaßt ist, entweder einen ersten Betriebsmodus zu selektieren, um jedesmal eine vorbestimmte Gesamtspeicherzeit $T_0 = N_1 \times T_3$ durch Durchführen einer Ladungsspeicherung in verteilter Art über vorbestimmte mehrere Male $N_1$ für ein vorbestimmtes Zeitintervall $T_3$ zu erzielen, oder einen zweiten Betriebsmodus, in welchem zur Erzielung derselben Gesamtspeicherzeit $T_0$ eine Speicherung $N_2$ mal, was sich von $N_1$ in dem ersten Betriebsmodus unterscheidet, durchgeführt wird und das Intervall für jede Teilspeicheroperation zu $T_3'$ (wobei $T_0 = N_2 \times T_3'$) gemacht wird.

10. Gerät nach Anspruch 1, wobei die Steuereinrichtung (15A) dafür eingerichtet ist, zwischen einem ersten Betriebsmodus, in welchem in einem Halbbildintervall Ladung aus der Abtasteinrichtung (1) bei einem ersten periodischen Zeittakt nach einem vertikalen Synchronisationssignal entfernt wird, und die Information aus der Abtasteinrichtung (1) von der Summiereinrichtung (2) bei einem zweiten periodischen Zeitakt ausgelesen wird, welcher eine Periode aufweist, die identisch mit der des ersten periodischen Zeittaktes ist, welcher aber hinter dem ersten periodischen Zeittakt um eine vorbestimmte Zeit $T_3$ nacheilt;

    und einem zweiten Betriebsmodus zu selektieren, in welchem in einem Halbbildintervall Ladung aus der Abtasteinrichtung (1) bei einem dritten periodischen Zeittakt, der durch Teilung des ersten periodischen Zeittaktes unter Anwendung eines vorbestimmten Frequenzteilungsverhältnisses erhalten wird, entfernt wird, und Information aus der Abtasteinrichtung (1) aus der Summiereinrichtung (2) bei einem vierten periodischen Zeittakt ausgelesen wird, der durch Teilen des zweiten periodischen Zeittaktes mit einem zu dem erstgenannten Frequenzteilungsverhältnis identischen Frequenzteilungsverhältnis erhalten wird.

11. Gerät nach Anspruch 1, wobei die Steuereinrichtung (15A) dafür eingerichtet ist, zwischen einem ersten Betriebsmodus, in welchem in einem Halbbildintervall Information aus der Abtasteinrichtung (1) von der Summiereinrichtung (2) zu einer vorbestimmten Zeit nach dem Ende jeder einzelnen der mehreren Operationen zur Entfernung der Ladung aus der Abtasteinrichtung (1) gelesen wird;

und einem zweiten Betriebsmodus zu selektieren, in welchem in einem Halbbildintervall Information aus der Abtasteinrichtung (1) von der Summiereinrichtung (2) nach dem Abschluß aller Ladungsentfernungsoperationen in einem Halbbildintervall gelesen wird.

12. Gerät nach Anspruch 1, wobei die Steuereinrichtung (15A) dafür eingerichtet ist, entweder einen ersten oder zweiten Betriebsmodus zu selektieren, wobei der erste Betriebsmodus dafür eingerichtet ist, eine vorbestimmte Gesamtspeicherzeit durch mehrmaliges Durchführen einer Teilspeicherung zu erzielen, und der zweite Betriebsmodus dafür eingerichtet ist, dieselbe vorbestimmte Gesamtladungszeit durch Ausführen einer zusammenhängenden Ladungsspeicherung für eine vorbestimmte Zeit zu erzielen; wobei die Steuereinrichtung (15A) dafür eingerichtet ist, eine allmähliche Änderung des Intervalls zwischen der vorbestimmten Anzahl von Speicheroperationen und dem Zeittakt des Beginns einer Speicherung bei einer Veränderung von dem ersten Betriebsmodus auf den zweiten Betriebsmodus und unter Konstanthaltung der Gesamtspeicherzeit zu bewirken.

13. Gerät nach Anspruch 1, wobei die Steuereinrichtung (15A) dafür eingerichtet ist, entweder einen ersten Betriebsmodus, in welchem in einem Halbbildintervall die Operation der Ladungsentfernung in der Abtasteinrichtung (1) zu jedem vorbestimmten Zeitpunkt $t_2$ nach einer ersten vorbestimmten Zeit $t_1$ von einem vertikalen Synchronisationssignal durchgeführt wird, und die Information aus der Abtasteinrichtung von der Summiereinrichtung (2) bei jeder einzelnen von einer vorbestimmten Anzahl n von Ladungsentfernungsoperationen bei einem dritten vorbestimmten Zeitpunkt t3 nach dem Ende jeder Ladungsentfernungsoperation gelesen wird; oder einen zweiten Betriebsmodus zu selektieren, in welchem in einem Halbbildintervall die Information aus der Abtasteinrichtung (1) von der Summiereinrichtung (2) nach Abschluß aller Ladungsentfernungsoperationen in einem Halbbildintervall gelesen wird; wobei die Steuereinrichtung (15A) dafür eingerichtet ist, eine allmähliche Änderung der ersten vorbestimmten Zeit $t_1$ und der vorbestimmten Anzahl von Malen n bei einer Veränderung von dem ersten Betriebsmodus auf den zweiten Betriebsmodus unter Konstanthaltung der Gesamtspeicherzeit zu bewirken.

14. Gerät nach einem der Ansprüche 8 bis 13, wobei Einrichtungen (12, 13, 14A) für die Ermittlung der Helligkeit des Bildes vorgesehen sind und wobei die Steuereinrichtung (15A) dafür eingerichtet ist, die Gesamtakkumulationsdauer ($T_0$) in Abhängigkeit von der Helligkeit des Bildes zu verändern, wobei die Gesamtakkumulationsdauer ($T_0$) in dem ersten und zweiten Betriebsmodus für eine gegebene Beleuchtung dieselbe bleibt.

15. Gerät nach Anspruch 14, wobei die Steuereinrichtung (15A) dafür eingerichtet ist, die Dauer der Akkumulationsoperationen und/oder die Anzahl der Akkumulationsoperationen in Abhängigkeit von der ermittelten Helligkeit zu verändern.

16. Gerät nach einem der vorstehenden Ansprüche, wobei der Zeitpunkt, bei welchem Ladung von der Abtasteinrichtung in die Summiereinrichtung (2) verschoben wird, und der Zeitpunkt, bei welchem Ladung aus der Abtasteinrichtung (1) entfernt wird, in ein horizontales Rücklaufintervall eines Standard-Fernsehsignals oder in dessen Nähe fallen.

17. Gerät nach einem der vorstehenden Ansprüche, wobei die Summiereinrichtung (2) ein vertikales Übertragungsregister enthält.

18. Gerät nach einem der vorstehenden Ansprüche, ferner mit einer Speichereinrichtung (3) zum Speichern eines Ausgangssignals aus der Summiereinrichtung (2), wobei die Speichereinrichtung genügend Kapazität zum Speichern eines Halbbildes einer Signalladung aufweist.

19. Gerät nach einem der vorstehenden Ansprüche, wobei die Abtasteinrichtung (1) mehrere in Spalten und Zeilen angeordnete photoelektrische Umwandlungsabschnitte enthält.

20. Verfahren zum Betreiben eines Bildabtastgerätes, welches das Steuern einer Bildabtasteinrichtung (1) in der Weise, daß die Bildabtasteinrichtung veranlaßt wird, mehrere intermittierende Ladungsakkumulationsoperationen für jedes Pixel eines Bildes durchzuführen, um mehrere photoelektrische Signale zu erzeugen, und das Summieren die mehreren ein Pixel repräsentierenden photoelektrischen Signale umfaßt, um eine Gesamtakkumulationsdauer ($T_0$) für dieses Pixel zu erzeugen, **gekennzeichnet durch**

ein Verändern des temporären Verteilungsmusters der mehreren intermittierenden Akkumulationsoperationen ohne die Gesamtakkumulationsdauer ($T_0$) zu verändern.

21. Verfahren nach Anspruch 20, welches die Variation des Verteilungsmusters durch Variieren irgendeines oder mehrerer Parameter wie der Dauer jeder Akkumulationsoperation, der Anzahl der Akkumulationsoperation und des Zeitpunktes der ersten Akkumulationsoperation umfaßt.

22. Verfahren nach Anspruch 20 oder 21, welches die Variation des Verteilungsmusters durch Selektieren entweder eines ersten Betriebsmodus, der ein erstes zeitliches Verteilungsmuster für die mehreren intermittierenden Akkumulationsoperationen bereitstellt, oder eines zweiten Betriebsmodus, der ein zweites davon unterschiedliches zeitliches Verteilungsmuster für die mehreren intermittierenden Akkumulationsoperationen bereitstellt, umfaßt.

23. Verfahren nach Anspruch 22, welches die Ermittlung der Helligkeit eines Bildes und die Variation der Gesamtakkumulationsdauer in Abhängigkeit von der ermittelten Helligkeit umfaßt, so daß die Gesamtakkumulationsdauer für eine gegebene Helligkeit oder Beleuchtung in dem ersten und zweiten Betriebsmodus dieselbe ist.

**Revendications**

1. Dispositif de détection d'image comprenant :

un moyen (1) de détection d'image destiné à effectuer une pluralité d'opérations intermittentes d'accumulation de charge pour chaque pixel d'une image pour produire une pluralité de signaux photoélectriques ; et
un moyen (2) de sommation de la pluralité de signaux photoélectriques représentant un pixel sur une période d'accumulation de somme totale ($T_0$) pour ce pixel, caractérisé par :
un moyen (15A) de commande destiné à changer la combinaison de répartition temporelle de la pluralité d'opérations intermittentes d'accumulation sans changer la période d'accumulation de somme totale ($T_0$).

2. Dispositif selon la revendication 1, dans lequel le moyen de commande est conçu pour changer l'intervalle entre les opérations intermittentes d'accumulation.

3. Dispositif selon la revendication 1 ou 2, dans lequel le moyen de commande est conçu pour changer le nombre d'opérations intermittentes d'accumulation.

4. Dispositif selon la revendication 1, 2 ou 3, dans lequel le moyen de commande est conçu pour commander le temps $T_1$ allant d'un signal de synchronisation verticale à une première de la pluralité d'opérations d'accumulation.

5. Dispositif selon la revendication 1, dans lequel le moyen (15A) de commande est conçu, dans l'intervalle d'une trame, pour faire varier indépendamment ou en association, un temps $T_1$ allant d'un signal de synchronisation verticale à une première de la pluralité d'opérations d'accumulations, un temps périodique $T_2$ après le signal de synchronisation verticale, auquel de la charge est éliminée du moyen de détection avant l'opération suivante d'accumulation et un temps périodique $T_3$, après chaque temps $T_2$, auquel la charge conservée par le moyen de détection est lue, en tant que signal photoélectrique, par le moyen de sommation.

6. Dispositif selon la revendication 5, dans lequel le moyen (15A) de commande est conçu pour faire que le temps périodique $T_3$ diminue lorsque le nombre d'opérations d'accumulation augmente et pour faire que le temps périodique $T_3$ augmente lorsque le nombre d'opérations d'accumulation diminue.

7. Dispositif selon la revendication 1, dans lequel le moyen de commande est conçu pour commander indépendamment un intervalle de conversion photoélectrique pendant lequel s'effectuent la pluralité d'opérations d'accumulation, un cadencement de début d'opération d'accumulation et une opération d'élimination de charge du moyen de détection ; le moyen de commande étant conçu pour effectuer les opérations d'accumulation et d'élimination de charge une pluralité de fois dans l'intervalle d'une trame.

8. Dispositif selon l'une quelconque des revendications précédentes, dans lequel le moyen (15A) de commande est conçu pour choisir l'un ou l'autre de premier et second modes d'attaque ayant des combinaisons de répartition différentes d'opérations d'accumulation, mais la même période totale d'accumulation.

9. Dispositif selon la revendication 1, dans lequel le moyen de commande est apte à choisir l'un ou l'autre : d'un premier mode d'attaque destiné à obtenir un temps total $T_0 = N_1 \times T_3$ prédéterminé de conservation en effectuant la conservation de charge d'une façon répartie une pluralité prédéterminée $N_1$ de fois pour un intervalle $T_3$ de temps prédéterminé chaque fois ; d'un second mode d'attaque, dans lequel, afin d'obtenir le même temps total $T_0$ de conservation, la conservation s'effectue $N_2$ fois, qui diffère de $N_1$ du premier mode d'attaque, et l'intervalle pour chaque opération de conservation dispersée est pris à $T_3'$ (où $T_0 = N_2 \times T_3'$).

10. Dispositif selon la revendication 1, dans lequel le moyen (15A) de commande apte à choisir entre un premier mode d'attaque dans lequel, dans l'intervalle d'une trame, la charge est éliminée du moyen (1) de détection à un premier cadencement périodique après un signal de synchronisation verticale, et l'information provenant du moyen (2) de détection est lue par le moyen (2) de sommation à un deuxième cadencement périodique qui a une période identique à celle du premier cadencement périodique mais qui retarde par rapport au premier cadencement périodique d'un temps $T_3$ prédéterminé ; et

un second mode d'attaque, dans lequel, dans l'intervalle d'une trame, la charge est éliminée du moyen (1) de détection à un troisième cadencement périodique obtenu en divisant le premier cadencement périodique en utilisant un rapport prédéterminé de division de fréquence, et dans lequel l'information provenant du moyen (1) de détection est lue à partir du moyen (2) de sommation à un quatrième cadencement périodique obtenu en divisant le deuxième cadencement périodique à un rapport de division de fréquence identique au premier rapport mentionné de division de fréquence.

11. Dispositif selon la revendication 1, dans lequel le moyen (15A) de commande est conçu pour choisir entre un premier mode d'attaque dans lequel, dans l'intervalle d'une trame, l'information provenant du moyen (1) de détection est lue par le moyen (2) de sommation un temps prédéterminé après la fin de chacune de plusieurs opérations pour éliminer la charge du moyen (1) de détection ; et

un second mode dans lequel, dans l'intervalle d'une trame, l'information provenant du moyen (1) de détection est lue par le moyen (2) de sommation après la fin de toutes les opérations d'élimination de charge dans l'intervalle d'une trame.

12. Dispositif selon la revendication 1, dans lequel le moyen (15A) de commande est conçu pour choisir l'un ou l'autre d'un premier ou d'un second modes d'attaque, le premier mode d'attaque étant conçu pour obtenir un temps de conservation total prédéterminé en effectuant la conservation d'une façon dispersée une pluralité de fois, et le second mode d'attaque étant conçu pour obtenir le même temps total prédéterminé de conservation en effectuant la conservation de charge en continu pendant un temps prédéterminé ; le moyen (15A) de commande étant conçu pour faire que l'intervalle entre le nombre prédéterminé d'opérations de conservation et le cadencement de début de la conservation soit modifié graduellement au moment d'une permutation entre ledit premier mode d'attaque et ledit second mode d'attaque, le temps total de conservation étant maintenu constant.

13. Dispositif selon la revendication 1, dans lequel le moyen (15A) de commande est conçu pour choisir l'un ou l'autre : d'un premier mode d'attaque dans lequel, dans l'intervalle d'une trame, l'opération d'élimination de charge du moyen (1) de détection s'effectue à chaque second instant $t_2$ prédéterminé après un premier instant $t_1$ prédéterminé à partir d'un signal de synchronisation verticale, et dans lequel l'information provenant dudit moyen de détection est lue par le moyen (2) de sommation, à chacun d'un nombre prédéterminé n d'opérations d'élimination de charge à un troisième instant $t_3$ prédéterminé après la fin de chaque opération d'élimination de charge ; ou d'un second mode d'attaque dans lequel, dans l'intervalle d'une trame, l'information provenant du moyen (1) de détection est lue par le moyen (2) de sommation après la fin de toutes les opérations d'élimination de charge dans l'intervalle d'une trame ; le moyen de commande étant conçu pour faire que le premier instant prédéterminé $t_1$ et le nombre prédéterminé de fois n varient graduellement lorsque ledit premier mode d'attaque et ledit second mode d'attaque sont permutés, le temps total de conservation étant maintenu constant.

14. Dispositif selon l'une quelconque des revendications 8 à 13, dans lequel des moyens (12, 13, 14A) sont prévus pour déterminer la luminosité de l'image et dans lequel le moyen (15A) de commande est apte à faire varier la période totale ($T_0$) d'accumulation en fonction de la luminosité de l'image, la période totale ($T_0$) d'accumulation dans les premier et second modes de période d'attaque étant identique pour un éclairement donné.

15. Dispositif selon la revendication 14, dans lequel le moyen (15A) de commande est conçu pour faire varier la durée des opérations d'accumulation et/ou le nombre d'opérations d'accumulation en fonction de la luminosité déterminée.

16. Dispositif selon l'une quelconque des revendications précédentes, dans lequel le cadencement auquel de la charge est déplacée du moyen de détection vers le moyen (2) de sommation et le cadencement auquel de la charge est éliminée du moyen (1) de détection tombent à l'intérieur d'un intervalle de retour horizontal, ou à proximité de celui-ci, d'un signal standard de télévision.

17. Dispositif selon l'une quelconque des revendications précédentes, dans lequel le moyen (2) de sommation comprend un registre de transfert vertical.

18. Dispositif selon l'une quelconque des revendications précédentes, comprenant en outre un moyen (3) de mémorisation destiné à mémoriser une sortie du moyen (2) de sommation, le moyen de mémorisation ayant une capacité suffisante pour mémoriser une trame d'une charge de signal.

19. Dispositif selon l'une quelconque des revendications précédentes, dans lequel le moyen (1) de détection comprend une pluralité de parties de conversion photoélectrique agencées en colonnes et rangées.

20. Procédé de mise en oeuvre d'un dispositif de détection d'image, qui comprend la commande d'un moyen (1) de détection d'image pour faire que le moyen de détection d'image effectue une pluralité d'opérations intermittentes d'accumulation de charge pour chaque pixel d'une image, pour produire une pluralité de signaux photoélectriques et la sommation de la pluralité de signaux photoélectriques représentant un pixel pour produire une période d'accumulation de somme totale ($T_0$) pour ce pixel, caractérisé par :
le changement de la combinaison de répartition temporelle de la pluralité des opérations intermittentes d'accumulation sans changer la période d'accumulation de somme totale ($T_0$).

21. Procédé selon la revendication 20, qui comprend la modification de la combinaison de répartition en faisant varier l'un quelconque ou plusieurs de la durée de chaque opération d'accumulation, du nombre d'opérations d'accumulation et du cadencement de la première opération d'accumulation.

22. Procédé selon la revendication 20 ou 21, qui comprend la modification de la combinaison de répartition en sélectionnant l'un ou l'autre d'un premier mode d'attaque fournissant une première combinaison de répartition temporelle pour la pluralité d'opérations intermittentes d'accumulation, ou un second mode d'attaque fournissant une seconde combinaison différente de répartition temporelle pour la pluralité d'opérations intermittentes d'accumulation.

23. Procédé selon la revendication 22, qui comprend la détermination de la luminosité d'une image et la modification de la période totale d'accumulation en fonction de la luminosité déterminée de façon que la période totale d'accumulation pour une luminosité ou un éclairement donné soit la même dans les premier et second modes d'attaque.

1 SENSOR PORTION

2 VERTICAL
TRANSFER REGISTER

A ————————————————————————— A'

5 OUTPUT AMPLIFIER

4 HORIZONTAL
TRANSFER REGISTER

# F I G.  1

φROG

6    1    7    2    6    9

SENSOR
PORTION

CS    ROG    VERTICAL
TRANSFER
REGISTER    CS

N-TYPE SUBSTRATE

8

φSUB

POTENTIAL WHEN SEEN
FROM THICKNESS DIRECTION
OF SENSOR PORTION

AT CHARGE STORAGE

AT READ-OUT

AT CHARGE SWEEP-OUT

# FIG. 2

# F I G.  3

22

**1 SENSOR PORTION**

**2 VERTICAL
TRANSFER REGISTER**

A ———————————————— A'

**11 CCD**

**3 MEMORY**

**5 OUTPUT AMPLIFIER**  **4 HORIZONTAL
TRANSFER REGISTER**

# F I G. 4

FIG. 5

**F I G. 6**

EP 0 484 134 B1

F I G. 7

VERTICAL
SYNCHRONIZING
SIGNAL

ONE FIELD ( 1 / 60 SEC )

$F_1$  $F_2$

$T_3$  $T_2$

φROG TRANSFER
PULSES

$R_1$  $R_2$  $R_3$  $R_{N-1}$  $R_N$

φSUB
ELIMINATION
PULSES

$T_1$  $T_2$

$S_1$  $S_2$  $S_3$  $S_{M-1}$  $S_M$

CHARGE IN
SENSOR PORTION

CHARGE IN
VERTICAL
TRANSFER
REGISTER

TOTAL STORAGE
TIME T0 = N x T3

STORAGE
INTERVAL

$d_1$  $d_2$  $d_3$  $d_{N-1}$  $d_N$

VERTICAL TRANSFER INTERVAL  TIME

VERTICAL RETRACE INTERVAL

FIG. 8

27

F I G. 9

EP 0 484 134 B1

START

S102

DYNAMIC MODE?　　NO

YES　　S104

$T_1 = t_1$
$T_2 = t_2$
$T_3 = t_3$

S106

$T_1 = t_1'$
$T_2 = t_2'$
$T_3 = t_3$

DETECT $\overline{Y}$　　S108

S110

$Y_1 < \overline{Y}?$　　YES　　S114

$T_3 = t_3'$

NO　　S112

$Y_2 > \overline{Y}?$　　YES　　S116

$T_2 = t_2''$

NO

# F I G.　10

FIG. 11(a) WHEN $Y_1 < \overline{Y}$ HOLDS STORAGE INTERVAL

FIG. 11(b) WHEN $Y_2 \leq \overline{Y} \leq Y_1$ HOLDS STORAGE INTERVAL

FIG. 11(c) WHEN $Y_2 > \overline{Y}$ HOLDS STORAGE INTERVAL

FIG. 11(d) WHEN $Y_1 < \overline{Y}$ HOLDS STORAGE INTERVAL

FIG. 11(e) WHEN $Y_2 \leq \overline{Y} \leq Y_1$ HOLDS STORAGE INTERVAL

FIG. 11(f) WHEN $Y_2 > \overline{Y}$ HOLDS STORAGE INTERVAL

ONE FIELD (1/60 SEC)

DYNAMIC MODE

STATIC MODE

TIME

EP 0 484 134 B1

FIG. 12

VERTICAL SYNCHRONIZING SIGNAL

ONE FIELD ( 1/60 SEC )

φROG TRANSFER PULSES

φSUB ELIMINATION PULSES

CHARGE IN SENSOR PORTION

CHARGE IN VERTICAL TRANSFER REGISTER

TOTAL STORAGE TIME $T_0 = N \times T_3$

STORAGE INTERVAL

VERTICAL TRANSFER INTERVAL
VERTICAL RETRACE INTERVAL

TIME

EP 0 484 134 B1

START

S202

DYNAMIC
MODE? — NO

YES

S204

$T_1 = t_1$
$T_2 = t_2$
$T_3 = t_3$
$K_j = k_j$

S216

$T_1 = t_1'$
$T_2 = t_2$
$T_3 = t_3$
$K_j = i_j$

S206

DETECT $\overline{Y}$

S218

DETECT $\overline{Y}$

S208

$Y_1 < \overline{Y}?$ — YES

NO

S212

$K_j = k_j'$

S210

$Y_2 > \overline{Y}?$ — YES

NO

S214

$K_j = k_j''$

S220

$Y_1 < \overline{Y}?$ — YES

NO

S222

$K_j = i_j'$

S224

$Y_2 > \overline{Y}?$ — YES

NO

S226

$K_j = i_j''$

# F I G. 13

FIG. 14(a)

WHEN $Y_1 < \overline{Y}$ HOLDS

FIG. 14(b)

WHEN $Y_2 \leqq \overline{Y} \leqq Y_1$ HOLDS

FIG. 14(c)

WHEN $Y_2 > \overline{Y}$ HOLDS

EP 0 484 134 B1

FIG. 15(a)

WHEN $Y_1 < \bar{Y}$ HOLDS

FIG. 15(b)

WHEN $Y_2 \leqq \bar{Y} \leqq Y_1$ HOLDS

FIG. 15(c)

WHEN $Y_2 > \bar{Y}$ HOLDS

ONE FIELD (1/60 SEC)

φROG TRANSFER PULSES

φSUB ELIMINATION PULSES

STORAGE INTERVAL

TIME

EP 0 484 134 B1

ONE FIELD (1 / 60 SEC)

VERTICAL
SYNCHRONIZING
SIGNAL

φROG TRANSFER
PULSES

φSUB
ELIMINATION
PULSES

CHARGE IN
SENSOR PORTION

CHARGE IN VERTICAL
TRANSFER REGISTER

STORAGE
INTERVAL

F1  F2

S1 S2  SM

T3  R1

Q1

VERTICAL TRANSFER INTERVAL

VERTICAL RETRACE INTERVAL

TIME

F I G. 16

VERTICAL SYNCHRONIZING SIGNAL

ONE FIELD ( 1 / 60 SEC )

$F_1$ $F_2$

φSUB ELIMINATION PULSES

$S_1$ $S_2$ $S_M$

φROG TRANSFER PULSES

$t3$

$R_1$ $R_2$ $R_3$

STORAGE INTERVAL

$a_1$ $a_2$ $a_3$

F I G. 17(a)

φROG TRANSFER PULSES

$t4$

$R_1$ $R_2$ $R_3$

STORAGE INTERVAL

$a_1$ $a_2$ $a_3$

F I G. 17(b)

φROG TRANSFER PULSES

$R_1$ $R_2$

STORAGE INTERVAL

$a_1$ $a_2$

F I G. 17(c)

EP 0 484 134 B1

F I G. 18

φROG TRANSFER
PULSES

φSUB
ELIMINATION
PULSES

CHARGE IN
SENSOR PORTION

CHARGE IN
VERTICAL
TRANSFER
REGISTER

STORAGE
INTERVAL

ONE FIELD ( 1/60 SEC )

$R_{10}$  $R_{11}$  $R_{12}$  $R_{N+8}$  $R_{N+9}$  $R_{N+10}$

$S_{21}$  $S_{22}$  $S_{M+19}$  $S_{M+20}$

$A_1$

TIME

# F I G.  19

F I G. 20A

EP 0 484 134 B1

F I G. 20B

φROG

CHARGE IN SENSOR PORTION

CHARGE IN VERTICAL TRANSFER REGISTER

THIRD FIELD

FOURTH FIELD

FIFTH FIELD

$t_1$

$t_3$

$2t_2$

$3t_2$

$4t_2$

EP 0 484 134 B1